# EUROPEAN PATENT APPLICATION

(11) **EP 4 746 459 A1**
(43) Date of publication of application: **20.05.2026**
(21) Application number: 24850689.1
(22) Date of filing: 24.06.2024
(51) Int. Cl.: H04W 4/50

(54) **COMMUNICATION METHOD AND APPARATUS**

(30) Priority: 04.08.2023 CN 202310985742
(71) Applicant: Huawei Technologies Co., Ltd., Shenzhen, Guangdong 518129 (CN)
(72) Inventor: LEI, Zhongding, Shenzhen, Guangdong 518129 (CN)
(74) Representative: Epping - Hermann - Fischer
(86) International application number: PCT/CN2024/100984
(87) International publication number: WO 2025/031038

(57) **Abstract**

A communication method and apparatus are provided. The method includes: After receiving a first request, a first apparatus determines at least one level of a first service based on the first request. The first request is used to request to revoke, for a first user, authorization for a first level of the first service, the first service includes a plurality of levels, the plurality of levels include the first level and a second level, and a resource corresponding to the second level of the first service is a first resource used to provide the first service for the first user. According to the method, after the first request for revoking, for the first user, the authorization for the first level of the first service, a network side may provide the first service for the first user by using the first resource corresponding to the second level of the first service, thereby avoiding interruption of the first service for the first user and avoiding denial of service for the first user.

## Description

### CROSS-REFERENCE TO RELATED APPLICATIONS

This application claims priority to Chinese Patent Application No. 202310985742.3, filed with the China National Intellectual Property Administration on August 4, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A capability exposure architecture of a 3rd generation partnership project (3rd generation partnership project, 3GPP) network provides a manner for the 3GPP network to externally provide a service. In such an architecture, an application function (application function, AF) may use a capability provided by the 3GPP network to process and/or obtain 3GPP-related data information. This may include processing and/or obtaining data of the 3GPP network, and may include processing and/or obtaining related data of a user of the 3GPP network. When processing and/or obtaining the related data of the user, the AF needs to obtain authorization from the user. For example, the AF may request the 3GPP network to externally send location information of the user. If the authorization is not obtained from the user, privacy information of the user may be exposed. For another example, the AF may request the 3GPP network to change network quality of service (quality of service, QoS) for the user. If the authorization is not obtained from the user, user experience may be inconsistent with an expectation, and the user may be further charged an extra fee.

How to improve performance of a service provided by a capability exposure architecture needs further research.

### SUMMARY

This application provides a communication method and apparatus, to improve performance of a service provided by a capability exposure architecture.

**According to a first aspect,** an embodiment of this application provides a communication method. The method may be applied to a first apparatus. The first apparatus may be an AzF, a CCF, or an AEF, or may be a module, for example, a chip, a chip system, or a processor, used in the AzF, the CCF, or the AEF, or may be a logical node, a logical module, or software that can implement all or some functions of the AzF, the CCF, or the AEF. The method may include: The first apparatus receives a first request, where the first request is used to request to revoke, for a first user, authorization for a first level of a first service, the first service includes a plurality of levels, and the plurality of levels include the first level. The first apparatus may determine at least one level of the first service based on the first request, where the at least one level includes a second level, and a resource corresponding to the second level of the first service is a first resource used to provide the first service for the first user.

According to the method, after receiving the first request used to request to revoke, for the first user, authorization for the first level of the first service, the first apparatus may determine the at least one level of the first service. The resource corresponding to the second level in the at least one level is the first resource used to provide the first service for the first user. In this way, after the authorization for the first level of the first service is revoked for the first user, a network side can still provide the first service for the first user by using the first resource, thereby avoiding interruption of the first service for the first user and avoiding denial of service for the first user.

In a possible design, valid authorization of the first service for the first user includes authorization for at least two levels of the first service, and the at least two levels include the first level. The first apparatus may determine one or more levels other than the first level in the at least two levels as the at least one level. According to this design, the first apparatus can quickly determine the at least one level of the first service based on the valid authorization of the first service for the first user.

In a possible design, the first apparatus may send information indicating the at least one level. According to this design, the first apparatus can accurately indicate the at least one level.

Optionally, the information indicating the at least one level includes at least one of the following: indication information of the at least one level; or information corresponding to the at least one level. In this way, the first apparatus can flexibly indicate the at least one level.

In a possible design, the at least one level includes N levels other than the first level in the at least two levels, and N is an integer greater than or equal to 2. The first apparatus may further send first indication information, where the first indication information indicates a first rule for selecting the second level from the N levels. According to this design, the first apparatus can accurately indicate the first rule, and a receiver can quickly and accurately determine the first rule based on the first indication information.

In a possible design, the at least one level includes N levels other than the first level in the at least two levels, and N is an integer greater than or equal to 2. The first apparatus may select the second level from the N levels according to a first rule. According to this design, the first apparatus can determine the at least one level and the second level. In this way, the first apparatus may transmit information indicating the second level, and does not need to transmit indication information of a level other than the second level in the at least one level, thereby saving transmission resources and reducing signaling overheads.

Optionally, the first rule includes at least one of the following: the second level is a highest-quality level in the N levels that is satisfiable by a network in which the first apparatus is located; or the second level is a latest authorized level in the N levels.

In a possible design, valid authorization of the first service for the first user includes authorization for one level of the first service, and the level is the first level. The first apparatus may determine the specified second level as the at least one level. According to this design, the first apparatus may determine the specified second level as the at least one level. In this way, after the authorization for the first level of the first service is revoked for the first user, a network may provide the first service for the first user by using the first resource corresponding to the second level, thereby avoiding interruption of the first service for the first user.

In a possible design, the first request further includes first information, or the first apparatus may further receive the first information. The first information indicates the second level. The first apparatus may determine the second level as the at least one level. According to this design, the first information received by the first apparatus may indicate the second level. In this way, the first apparatus does not need to determine the second level through calculation, thereby reducing a calculation amount of the first apparatus, and saving calculation resources of the first apparatus. In addition, after the authorization for the first level of the first service is revoked for the first user, a network may provide the first service for the first user by using the first resource corresponding to the second level, thereby avoiding interruption of the first service for the first user.

In a possible design, the first information is indication information of the second level, or the first information is information corresponding to the second level. Valid authorization of the first service for the first user includes authorization for the second level of the first service. According to this design, the first information can flexibly indicate the second level.

In a possible design, the first apparatus may further send information indicating the second level. According to this design, the first apparatus can accurately indicate the second level.

Optionally, the information indicating the second level includes at least one of the following: the indication information of the second level; or the information corresponding to the second level. In this way, the first apparatus can flexibly indicate the second level.

In a possible design, the first apparatus may further send at least one of the following: indication information of the first user or indication information of the first service. In this way, a receiver can determine authorization information corresponding to the first user and the first service.

In a possible design, the first request includes at least one of the following: first authorization information or indication information of the first authorization information. The first authorization information is authorization information of authorizing the first level of the first service to the first user. In this way, a receiver can quickly determine, based on the first authorization information or the indication information of the first authorization information, that the first request is used to request to revoke authorization corresponding to the first authorization information.

In a possible design, the first request includes at least one of the following: the indication information of the first user; or the indication information of the first service. In this way, a receiver can quickly determine, based on the indication information of the first user and/or the indication information of the first service, that the first request is used to request to revoke authorization of the first service for the first user.

In a possible design, the first request includes the first authorization information. The first authorization information is the authorization information of authorizing the first level of the first service to the first user, and the first authorization information includes at least one of the following: the indication information of the first user or the indication information of the first service. In this design, the indication information of the first user and/or the indication information of the first service may be included in the first authorization information, so that there is no need to set, in the first request, an additional field used to carry the indication information of the first user and/or the indication information of the first service.

In a possible design, the first apparatus may determine the at least one level of the first service for the first user based on the indication information of the first user and the indication information of the first service. According to this design, the first apparatus can quickly and accurately determine the at least one level of the first service for the first user.

In a possible design, the first apparatus may determine at least one piece of authorization information based on the indication information of the first user and the indication information of the first service, where each piece of authorization information in the at least one piece of authorization information includes the indication information of the first user and the indication information of the first service, and each piece of authorization information in the at least one piece of authorization information is authorization information of authorizing one or more levels of the first service to the first user. Then, the first apparatus may determine the at least one level of the first service based on the at least one piece of authorization information. According to this design, the first apparatus can quickly and accurately determine the at least one level of the first service for the first user.

Optionally, the first service is a QoS service, a level of the first service is a QoS level or a QoS level corresponding to a 5QI value, and the first resource is a PDU session.

**According to a second aspect,** an embodiment of this application provides a communication method. The method may be applied to a first apparatus. The first apparatus may be an API invoker or an apparatus (for example, a terminal or an AF) including the API invoker, or may be a module, for example, a chip, a chip system, or a processor, used in the API invoker or the apparatus including the API invoker, or may be a logical node, a logical module, or software that can implement all or some functions of the API invoker or the apparatus including the API invoker. The method may include: The second apparatus sends a first request, where the first request is used to request to revoke, for a first user, authorization for a first level of a first service, the first service includes a plurality of levels, and the plurality of levels include the first level. The first request further includes first information, or the second apparatus further sends the first information. The first information indicates a second level, and a resource corresponding to the second level of the first service is a first resource used to provide the first service for the first user. In a possible design, the first information is indication information of the second level, or the first information is information corresponding to the second level, and valid authorization of the first service for the first user includes authorization for the second level of the first service.

In a possible design, the first request includes at least one of the following: first authorization information or indication information of the first authorization information. The first authorization information is authorization information of authorizing the first level of the first service to the first user.

In a possible design, the first request includes at least one of the following: indication information of the first user; or indication information of the first service.

In a possible design, the first request includes the first authorization information. The first authorization information is the authorization information of authorizing the first level of the first service to the first user, and the first authorization information includes at least one of the following: the indication information of the first user or the indication information of the first service.

In a possible design, the first service is a QoS service, a level of the first service is a QoS level or a QoS level corresponding to a 5QI value, and the first resource is a PDU session.

**According to a third aspect,** this application provides a communication apparatus. The communication apparatus may be a terminal or a module (for example, a circuit or a chip) in the terminal, or may be a logical node, a logical module, or software that can implement all or some functions of the terminal. The communication apparatus has a function of implementing the first aspect. For example, the communication apparatus includes a corresponding module, unit, or means for performing the operations in the first aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the first aspect.

In a possible design, the communication apparatus includes a processor, and the processor may be coupled to a memory. The memory may store a necessary computer program or necessary instructions for implementing the function in the first aspect. The processor may execute the computer program or the instructions stored in the memory. When the computer program or the instructions are executed, the communication apparatus is enabled to implement the method in any possible design of the first aspect.

In a possible design, the communication apparatus includes a processor and a memory. The memory may store a necessary computer program or necessary instructions for implementing the function in the first aspect. The processor may execute the computer program or the instructions stored in the memory. When the computer program or the instructions are executed, the communication apparatus is enabled to implement the method in any possible design of the first aspect.

In a possible design, the communication apparatus includes a processor and an interface circuit.

The processor is configured to communicate with another apparatus through the interface circuit, and perform the method in any possible design of the first aspect.

**According to a fourth aspect,** this application provides a communication apparatus. The communication apparatus may be an API invoker or an apparatus (for example, a terminal or an AF) including the API invoker, or may be a module, for example, a chip, a chip system, or a processor, used in the API invoker or the apparatus including the API invoker, or may be a logical node, a logical module, or software that can implement all or some functions of the API invoker or the apparatus including the API invoker. For example, the communication apparatus includes a corresponding module, unit, or means for performing the operations in the second aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the second aspect.

In a possible design, the communication apparatus includes a processor, and the processor may be coupled to a memory. The memory may store a necessary computer program or necessary instructions for implementing the function in the second aspect. The processor may execute the computer program or the instructions stored in the memory. When the computer program or the instructions are executed, the communication apparatus is enabled to implement the method in any possible design of the second aspect.

In a possible design, the communication apparatus includes a processor and a memory. The memory may store a necessary computer program or necessary instructions for implementing the function in the second aspect. The processor may execute the computer program or the instructions stored in the memory. When the computer program or the instructions are executed, the communication apparatus is enabled to implement the method in any possible design of the second aspect.

In a possible design, the communication apparatus includes a processor and an interface circuit. The processor is configured to communicate with another apparatus through the interface circuit, and perform the method in any possible design of the second aspect.

It may be understood that, in the third aspect or the fourth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a fifth aspect,** this application provides a communication system. The communication system may include the communication apparatus according to the third aspect and the communication apparatus according to the fourth aspect.

**According to a sixth aspect,** this application provides a computer-readable storage medium. The computer storage medium stores computer-readable instructions. When a computer reads and executes the computer-readable instructions, the computer is enabled to perform the method in any one of the possible designs of either of the first aspect and the second aspect.

**According to a seventh aspect,** this application provides a computer program product. When a computer reads and executes the computer program product, the computer is enabled to perform the method in any one of the possible designs of either of the first aspect and the second aspect.

**According to an eighth aspect,** this application provides a chip. The chip is configured to read a computer program stored in a memory, to perform the method in any one of the possible designs of either of the first aspect and the second aspect.

For technical effects that can be achieved in any one of the second aspect to the eighth aspect, refer to the technical effects that can be achieved in any possible design in the first aspect. No repeated description is provided.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a flowchart of a first communication method according to an embodiment of this application;
FIG. 4 is a flowchart of a second communication method according to an embodiment of this application;
FIG. 5 is a flowchart of a third communication method according to an embodiment of this application;
FIG. 6 is a flowchart of a fourth communication method according to an embodiment of this application;
FIG. 7 is a flowchart of a fifth communication method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes an architecture of a communication system to which a method provided in this application is applied.

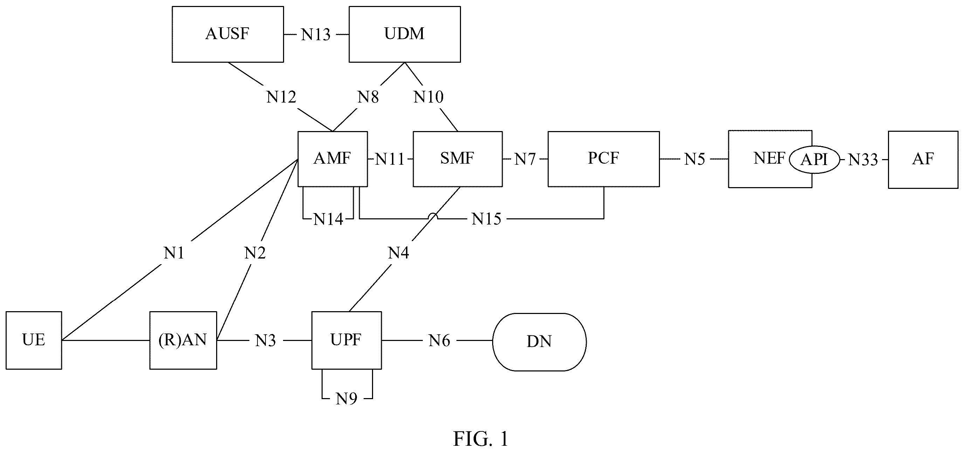

FIG. 1 is a diagram of an architecture of a communication system to which an embodiment of this application is applicable, and shows a 5th generation (the 5^{th} generation, 5G) network architecture based on a service-based architecture. As shown in FIG. 1, the communication system may include three parts: a terminal part, an operator network part, and a data network (data network, DN). The following describes functions of some network elements.

A terminal may also be referred to as a terminal device (terminal device) or user equipment (user equipment, UE), and is a device that has wireless receiving and sending functions; and may be deployed on land, and include an indoor, outdoor, handheld, or in-vehicle terminal; or may be deployed on a water surface (for example, on a ship); or may be deployed in the air (for example, on an aircraft, a balloon, or a satellite). The terminal may be a mobile phone (mobile phone), a tablet computer (pad), a computer having wireless sending and receiving functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

The terminal may establish a connection to an operator network through an interface (for example, N1) provided by the operator network, and use a service such as data and/or voice provided by the operator network. The terminal may further access the DN through the operator network, and use an operator service deployed on the DN and/or a service provided by a third party. The third party may be a service provider other than the operator network and the terminal, and may provide a service such as data and/or voice for the terminal. A specific representation form of the third party may be specifically determined based on an actual application scenario, and is not limited herein. The operator network may be a network deployed by an operator, and may include an access network device and a core network device. In a possible implementation method, the operator network further includes an AF network element. Alternatively, the AF network element may not belong to the operator network, but belong to a third party.

The access network device is a device in a wireless network, for example, includes a radio access network (radio access network, RAN) node or a radio access network device that connects the terminal to the wireless network. Currently, some examples of the access network device include: a next generation NodeB (gNodeB, gNB) in 5G, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), integrated access and backhaul (integrated access and backhaul, IAB), and the like. In an implementation, the access network device may alternatively be an access network device in a future communication system (for example, a 6th generation (the 6^{th} generation, 6G) communication system).

The core network device may include at least one of the following network elements: a mobility management network element, a session management network element, a user plane network element (for example, a user plane function (user plane function, UPF) network element), a data management network element (for example, a unified data management (unified data management, UDM) network element), a unified data repository (unified data repository, UDR) network element, a network exposure network element (for example, a network exposure function (network exposure function, NEF) network element), a policy control network element (for example, a policy control function (policy control function, PCF) network element), an authentication function network element (for example, an authentication server function (authentication server function, AUSF) network element), or the like. The following separately describes some of the network elements.

In this application, the mobility management network element is a control plane network element provided by the operator network, and is responsible for access control and mobility management for the terminal to access the operator network, for example, including functions such as mobility status management, allocation of a temporary user identity, and user authentication and authorization. In 5G, the mobility management network element may be an access and mobility management function (access and mobility management function, AMF) network element. In future communication such as 6G, the mobility management network element may still be an AMF network element, or have another name. This is not limited in this application.

In this application, the session management network element is a control plane network element provided by the operator network, and is responsible for managing a protocol data unit (protocol data unit, PDU) session of the terminal. The PDU session is a channel used to transmit a PDU, and the terminal and the DN need to transmit PDUs to each other through the PDU session. An SMF network element is responsible for establishment, maintenance, deletion, and the like of the PDU session. Functions of the session management network element include session management (for example, session establishment, modification, and release, including maintenance of a tunnel between a user plane network element and the access network device), selection and control of the user plane network element, service and session continuity (service and session continuity, SSC) mode selection, and roaming. In 5G, the session management network element may be a session management function (session management function, SMF) network element. In future communication such as 6G, the session management network element may still be an SMF network element, or may be a network element that has another name but has all or some functions of the session management network element. This is not limited in this application.

In this application, the network exposure network element is a control plane network element provided by the operator. The network exposure network element exposes an external interface of the operator network to a third party in a secure manner. The interface is, for example, an application programming interface (application programming interface, API). For example, when the session management network element needs to communicate with a third-party network element, the network exposure network element may serve as a relay for communication between the session management network element and the third-party network element. When the network exposure network element serves as the relay, the network exposure network element may translate identification information of a subscriber and identification information of the third-party network element. For example, when sending a subscriber permanent identifier (subscriber permanent identifier, SUPI) of the subscriber from the operator network to the third party, the network exposure network element may translate the SUPI into an external identity (identity, ID) corresponding to the SUPI. On the contrary, when sending an external ID (a network element ID of the third party) to the operator network, the network exposure network element may translate the external ID into an SUPI. In 5G, the network exposure network element may be an NEF network element. In future communication such as 6G, the network exposure network element may still be an NEF network element, or may have another name. This is not limited in this application.

In embodiments of this application, a communication apparatus configured to implement a function of the access network device, the terminal, or the core network device may be the access network device, the terminal, or the core network device, or may be an apparatus, for example, a chip system, that can support the access network device, the terminal, or the core network device in implementing the function. The apparatus may be mounted in the access network device, the terminal, or the core network device. In the technical solutions provided in embodiments of this application, an example in which an apparatus configured to implement the function of the access network device is the access network device, an apparatus configured to implement the function of the terminal is the terminal, and an apparatus configured to implement the function of the core network device is the core network device is used to describe the technical solutions provided in embodiments of this application.

The DN is a network located outside the operator network. The operator network may access a plurality of DNs, and a plurality of services may be deployed on the DN, to provide a service such as data and/or voice for the terminal. For example, the DN is a private network of a smart factory, a sensor installed in a workshop of the smart factory may be a terminal, a control server of the sensor is deployed in the DN, and the control server may serve the sensor. The sensor may communicate with the control server to obtain an instruction of the control server, transmit collected sensor data to the control server according to the instruction, and the like. For another example, the DN is an internal office network of a company, a mobile phone or a computer of an employee of the company may be a terminal, and the mobile phone or the computer of the employee may access information, data resources, and the like on the internal office network of the company.

In FIG. 1, N1, N2, N3, N4, and the like are interface sequence numbers. For meanings of these interface sequence numbers, refer to meanings defined in the 3GPP standard protocol. This is not limited herein.

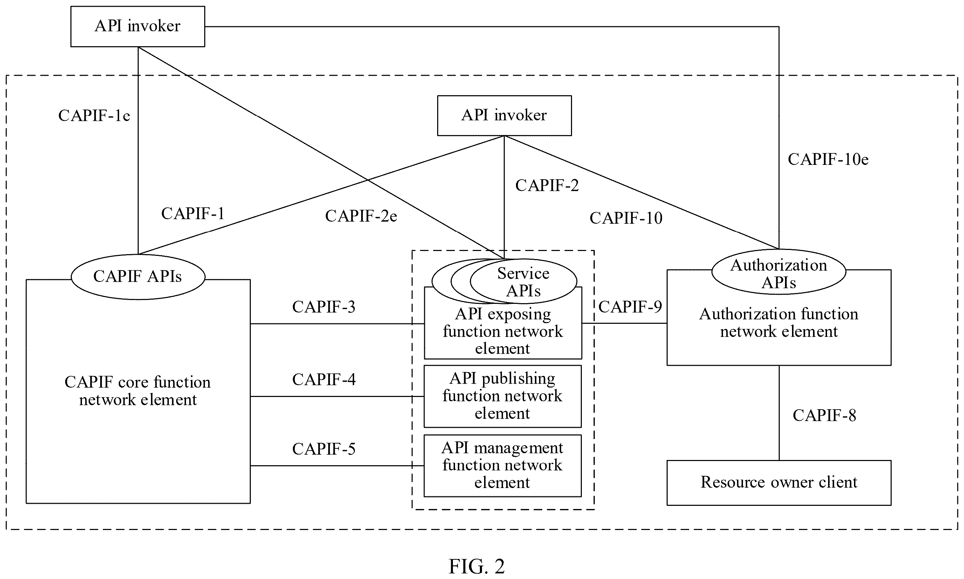

FIG. 2 shows an example of an API system architecture to which an embodiment of this application may be applicable. The architecture may be a common API framework (common API framework, CAPIF) architecture. As shown in FIG. 2, the CAPIF architecture may include an API invoker (API invoker), a CAPIF core function (CAPIF core function, CCF) network element, an authorization function (authorization function, AuF or AzF) network element, and an API exposing function (API exposing function, AEF) network element. Optionally, the CAPIF architecture may further include at least one of the following: an API publishing function (API publishing function, APF) network element, an API management function (API management function) network element, or a resource owner client (resource owner client(s), RO Client). The following describes components of the CAPIF architecture.

The API invoker is usually a third-party application that signs a service agreement with a public land mobile network (public land mobile network, PLMN) operator. The application may run in a terminal or an AF. Therefore, the API invoker may be a part of the terminal or a part of the AF. The API invoker may have the following functions: providing identity information of the API invoker and other information required for authentication on the API invoker; supporting mutual authentication with the CCF; obtaining authorization before accessing a service API; discovering a service API; searching for and invoking a service API; and the like. For a location of the API invoker in a communication network, refer to the AF network element or UE in FIG. 1.

The CCF may have the following functions: performing authentication on the API invoker based on the identity information of the API invoker and the other information required for authentication on the API invoker; supporting mutual authentication with the API invoker; providing authorization for the API invoker before the API invoker accesses a service API; publishing and storing service API information and supporting service API discovery; controlling access to a service API according to a policy configured by the PLMN operator; monitoring service API invocation; storing a service API invocation log and providing the service API invocation log for the authorization function network element; performing charging based on the service API invocation log; adding a new API invoker and deleting an API invoker; storing CAPIF and service API-related policy configurations; supporting an audit based on an access log (for example, detecting whether there is an abuse); and supporting publishing and/or discovering a service API by using another CAPIF core function during interworking with the CAPIF. Optionally, the CCF may be a device in a core network, or may be a device in another network. This is not limited in this application.

The AzF is configured to obtain user authorization. In this application, the AuF and the AzF may be replaced with each other. In addition, the AzF and the CCF each have an authorization function, and the AzF and the CCF may be disposed in a same device, or may be located in different devices. The following uses an example in which the AzF and the CCF are disposed in a same device for description. In this case, the AzF and the CCF may not be distinguished. To be specific, the AzF and the CCF below may be replaced with each other, and may also be referred to as an authorization server (authorization server).

The AEF is configured to provide a service API and is an entry for the API invoker to invoke the service API. The AEF may have the following functions: performing authentication on the API invoker based on the identity information and the other information required for API invoker authentication that are provided by the CCF; verifying the authorization provided by the CCF; and recording a quantity of times that a service API is invoked by the CCF. For example, the AEF may be an NEF. In other words, for a location of the AEF in the communication network, refer to the NEF network element in FIG. 1.

The API publishing function network element is a function network element that enables an API provider to publish an API, and may publish information about a service API to the CCF, so that the API invoker finds the information about the service API in the CCF. It should be noted that the API publishing function network element and the NEF may be co-deployed.

The API management function network element manages a service API, for example, monitors a status of the service API, and records invocation information. It should be noted that the API management function network element and the NEF may be co-deployed.

The RO client is an application client used by a user, and may display an operation interface to the user. The RO client is, for example, an operating system or a browser. The RO client may be an application on the UE in FIG. 1.

In FIG. 2, CAPIF-1, CAPIF-1e, CAPIF-2, CAPIF-2e, and the like are reference points. For meanings of these reference points, refer to meanings defined in the 3GPP standard protocol. This is not limited herein.

It should be noted that the communication systems shown in FIG. 1 and FIG. 2 do not constitute a limitation on the communication system to which embodiments of this application are applicable. Therefore, a communication method provided in embodiments of this application is further applicable to communication systems of various standards, for example, a long term evolution (long term evolution, LTE) communication system, a 5G communication system, a 6G communication system, a future communication system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communications, MTC), internet of things (internet of things, IoT), long term evolution-machine to machine (LTE-machine to machine, LTE-M), machine to machine (machine to machine, M2M), internet of things, and the like. In addition, the communication system provided in this application may be used in a terrestrial network (terrestrial network, TN) and/or a non-terrestrial network (non-terrestrial network, NTN). This is not limited. In addition, it should be further noted that names of network elements in the communication system are not limited in embodiments of this application. For example, in communication systems of different standards, network elements may have other names. For another example, when a plurality of network elements are integrated into a same physical device, the physical device may alternatively have another name.

For ease of understanding of this application, the following describes terms in this application.
(1) A token (token) is a digital object (digital object), a data field, or a character string, and includes authorization information or authentication information. For example, the token may indicate to authorize one or more services or resources for one or more users.

Tokens may be classified into a plurality of types based on purposes, for example, an access token (access_token), a refresh token (refresh_token), and an identity token (ID token). The access token is a credential (credential) used to access a protected resource, for example, may be used to authorize an API invoker to access an API service, for example, a QoS service, corresponding to the access token through an AEF. The refresh token is a credential used to obtain an access token, for example, may be used to authorize an API invoker to request a CCF for obtaining a new token when a current access token expires. In other words, the refresh token may be used to update use time of the current token. In addition, the refresh token may be alternatively used to shorten a validity period of the current access token or reduce a permission scope (scope) of the current access token.

A token may include a claim (claim). The claim is a small piece of asserted (asserted) information about a token subject (subject), and may include at least one of the following:
1. Expiration time: may be used to determine expiration time of the token. For example, in the claim of the token, expiration time {12/02/2023} indicates that the token expires from December 2, 2023.
2. API invoker identifier (identifier, ID) (API Invoker ID): indicates an API invoker corresponding to the token. For example, the claim of the token includes an API invoker ID #1. If the token is an access token, it indicates that an API invoker corresponding to the API invoker ID #1 is authorized to access an API service corresponding to the access token through an AEF. If the token is a refresh token, it indicates that an API invoker corresponding to the API invoker ID #1 is authorized to request a CCF for obtaining a refreshed token.
3. AEF ID: indicates an AEF corresponding to the token. For example, the claim of the token includes an AEF ID #1. If the token is an access token, it indicates that an API invoker is authorized to access an API service corresponding to the access token through an AEF corresponding to the AEF ID #1.
4. Service indication information: indicates a service authorized by the token. The service indication information may be an API service ID (API service ID), and the API service ID may also be referred to as a service API ID (service API ID) or a service ID (service ID). For example, the claim of the token includes an API service ID #1. If the token is an access token, it indicates that an API invoker is authorized to access an API service corresponding to the API service ID #1 through an AEF.
5. User indication information: indicates a user corresponding to the token. The user indication information may be an ID of the user, or may be an ID of a terminal corresponding to the user, for example, a generic public subscription identifier (generic public subscription identifier, GPSI) or an SUPI of the user.
6. Scope (scope): is used to determine an authorization scope of the token. For example, the scope of the claim of the token includes an AEF ID #1, an API service ID #1, and an API service ID #2, indicating that an API invoker is authorized to access API services corresponding to the API service ID #1 and the API service ID #2 through an AEF #1.

Optionally, each piece of information in the foregoing claim may be a separate claim. For example, the expiration time is a claim, and the scope is another claim. It should be noted that the service indication information may be a separate claim, or may be included in the claim of scope. A specific claim in which the service indication information is included is not limited in this application.

It should be noted that tokens may be alternatively classified based on whether the tokens include information such as a claim. For example, a token of a structured (structured) type includes one or more pieces of the foregoing claim information. A receiver or verifier (for example, an AEF) of the token can obtain the claim information from the token. For another example, a token of an opaque (opaque) type does not include the foregoing claim information, and a receiver or verifier (for example, an AEF) of the token needs to request another network element by using other information in the token, to indirectly obtain claim information or verify claim information. Optionally, the other information may be index (reference) information, and the index information is, for example, a token ID (token ID) or a reference ID (reference ID). Tokens may be alternatively classified in another manner. For example, a token of a bearer (bearer) type means that a bearer of the token is authorized to use a resource or service corresponding to the token; and a token of a message authentication code (message authentication code, MAC) type requires a bearer of the token to further prove that the bearer has a corresponding MAC key, and then the bearer is authorized to use a resource or service corresponding to the token. A token classification method is not limited in this application.

Optionally, the token may further include a signature. The signature may be a signature of a CCF for the claim of the token, and may be used to protect integrity and/or confidentiality of the token. In this application, the token may be encrypted, or the token may be unencrypted. If the token is encrypted, a token holder (for example, an API invoker) needs to obtain a decryption key to read the claim in the token. Whether the token is encrypted is not limited in this application.

(2) A QoS flow is used to transmit data with a same QoS feature (a reliability requirement, a delay requirement, or the like) in a service.

A mobile communication system manages QoS by using a QoS flow. For each service flow, the mobile communication system may select a corresponding QoS flow based on a QoS requirement of a service. QoS flows include a guaranteed bit rate (guaranteed bit rate, GBR) QoS flow and a non-guaranteed bit rate (non-guaranteed bit rate, non-GBR) QoS flow.

In a 5G system, configuration information (which may also be referred to as a parameter) of a QoS flow may include a 5G QoS identifier (5G QoS identifier, 5QI). The 5QI may be used to index a QoS feature that is set by the 5G system for the QoS flow. The QoS feature may include at least one of the following: a resource type (resource type, where the resource type includes GBR resource and non-GBR resource), a priority (priority), a packet delay budget (packet delay budget, for example, a delay of a packet from a terminal device to a user plane network element), a packet error rate (packet error rate), an MFBR, and an averaging window (averaging window, used to calculate a rate corresponding to GBR). Table 1 shows several possible correspondences between a 5QI and a QoS feature.

**Table 1**

| QoS level (level) | 5QI | Resource type | Priority level | Delay budget | Error probability | Service example |
|---|---|---|---|---|---|---|
| 1 | 1 | GBR | 20 | 100 milliseconds (ms) | 10⁻² | Conversational voice (Conversational Voice) |
| 2 | 3 | GBR | 30 | 50 ms | 10⁻³ | Real-time gaming (Real-Time Gaming) |
| 3 | 6 | Non-GBR | 60 | 300 ms | 10⁻⁶ | Video (Video), World Wide Web (world wide web, www), or e-mail (e-mail) |
| 4 | 80 | Non-GBR | 68 | 10 ms | 10⁻⁶ | Augmented reality (Augmented Reality) |

In the following of this application, "sending information to... (terminal)" may be understood as that a destination end of the information is the terminal, and may include directly or indirectly sending the information to the terminal. "Receiving information from... (terminal)" may be understood as that a source end of the information is the terminal, and may include directly or indirectly receiving the information from the terminal. Information may undergo necessary processing, for example, a format change, between a source end and a destination end of information sending. However, the destination end can understand valid information from the source end. Similar expressions in this application may be understood similarly. Details are not described herein again.

Currently, a 3GPP network can externally provide a service. For example, the service externally provided by the 3GPP network includes providing location information of a user. After obtaining authorization for the location information of the user, an API invoker may obtain the location information of the user through the 3GPP network. For another example, the service externally provided by the 3GPP network includes a QoS service. An API invoker may request the 3GPP network for changing a QoS service level of a user or a terminal. After obtaining authorization for a specific level of the QoS service, the API invoker may establish or modify a PDU session corresponding to the level for the user or the terminal through the 3GPP network, so that communication quality of the user or the terminal satisfies a requirement at the level.

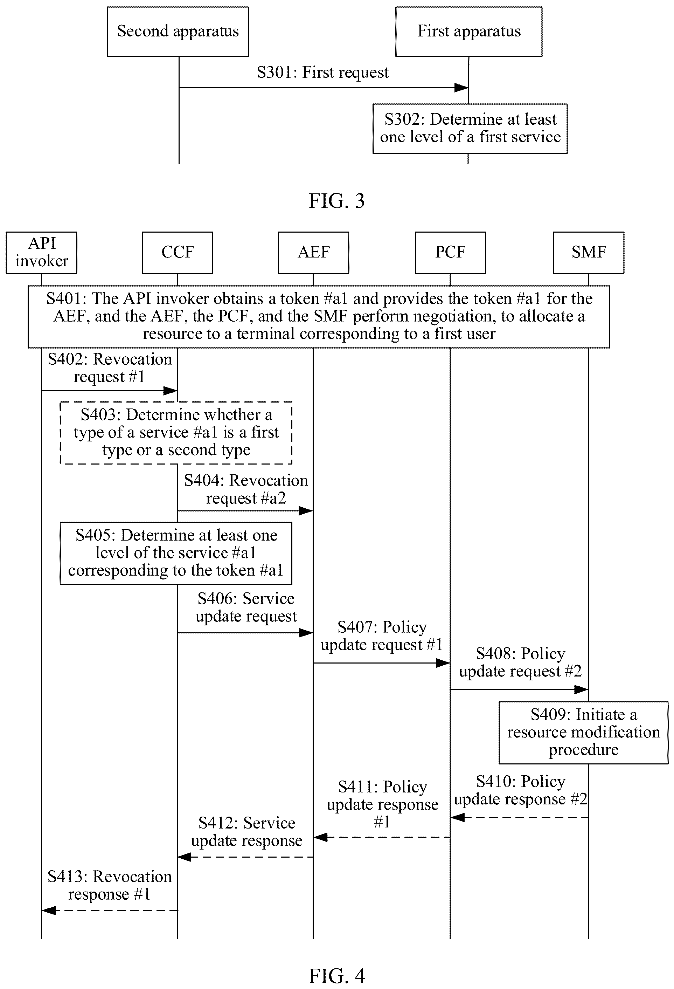

After the API invoker obtains authorization, the authorization may be revoked. Currently, when the authorization is revoked, all resources related to a service corresponding to the authorization are released. For example, after obtaining authorization for obtaining location information of a user, the API invoker may send a revocation request to an AzF. The revocation request is used to request to revoke the authorization for the location information of the user. Then, the AzF may revoke, for the API invoker, the authorization for the location information of the user, and notify the 3GPP network (for example, an AEF) to release a resource corresponding to the authorization. However, a service corresponding to authorization may be a service having a plurality of levels. If authorization is for a specific level of the service, when the authorization is revoked, all resources related to the service corresponding to the authorization are released, and consequently, the service may be interrupted. The following uses an example in which a service having a plurality of levels is a QoS service for description. For example, an API invoker obtains a token #a, and the token #a indicates that an authorized QoS service for a user is a QoS level 3. If the API invoker sends, to an AzF, a revocation request used to request to revoke the token #a, the AzF may revoke, for the user, authorization for the QoS service, and notify an AEF to release all resources corresponding to the QoS service. In this case, a PDU session corresponding to the QoS service of the user is released, resulting in interruption of the service of the user, that is, denial of service (Denial of service, DoS). In view of this, embodiments of this application provide a communication method. FIG. 3 is a schematic flowchart corresponding to a communication method according to an embodiment of this application. In FIG. 3, the method is illustrated by using an example in which a first apparatus and a second apparatus are execution bodies of the interaction illustration. However, the execution bodies of the interaction illustration are not limited in this application. For example, the first apparatus may be an AzF, a CCF, or an AEF, or may be a module, for example, a chip, a chip system, or a processor, used in the AzF, the CCF, or the AEF, or may be a logical node, a logical module, or software that can implement all or some functions of the AzF, the CCF, or the AEF; and the second apparatus may be an API invoker, or may be a module, for example, a chip, a chip system, or a processor, used in the API invoker, or may be a logical node, a logical module, or software that can implement all or some functions of the API invoker.

As shown in FIG. 3, the method includes the following steps.

**S301:** The second apparatus sends a first request, and correspondingly, the first apparatus receives the first request.

The first request is used to request to revoke, for a first user, authorization for a first level of a first service, the first service may include a plurality of levels, and the plurality of levels include the first level. The first service is, for example, a QoS service. A level of the first service is, for example, a value corresponding to a QoS level, or a QoS level corresponding to a 5QI value (5QI value) or a QoS flow identifier (QoS flow identifier, QFI) value (QFI value).

In some examples, the first request may include first authorization information, and the first authorization information is authorization information of authorizing the first level of the first service to the first user. In this way, the first apparatus can determine, based on the first authorization information in the first request, that the second apparatus requests to revoke, for the first user, the authorization for the first level of the first service. The first authorization information may be represented in a plurality of forms. For example, the first authorization information may be represented in at least one of the following forms: a token, a ticket (ticket), a voucher (voucher), a certificate (certificate), an assertion (assertion), a credential (credential), an authorization information element (information element), and an authorization information container (container). The following uses an example in which the first authorization information is represented in a form of a token for description. For example (which is referred to as example 1 below), the first authorization information is a token #1, user indication information in the token #1 is indication information of the first user, the indication information of the first user may be a GPSI or an SUPI of the first user, and service indication information in the token #1 is indication information of the QoS service. The token #1 further includes: scope: {QoS: level=3}, which indicates that the token #1 is authorization information of authorizing the QoS level 3 of the QoS service to the first user. When the first request includes the token #1, the first request is used to request to revoke, for the first user, authorization for the QoS level 3 of the QoS service. It should be understood that example 1 is described by using an example in which the first level is included in the scope in the token #1. The first level may be alternatively included in other information of the token #1, for example, included in the service indication information. This is not limited in this application.

In some other examples, the first request may include indication information of the first authorization information. For specific content of the first authorization information, refer to the description in the foregoing paragraph. Details are not described herein again. The indication information of the first authorization information is, for example, an ID of the first authorization information. In this way, the first apparatus may determine specific content in the first authorization information based on the indication information of the first authorization information, and then determine to revoke, for the first user, the authorization for the first level of the first service. For example, the first authorization information is the token #1 in example 1. When the first request includes an ID of the token #1, the first apparatus determines, based on the ID of the token #1, that the token #1 includes: scope: {QoS: level=3}, and then determines that the first request is used to request to revoke, for the first user, authorization for the QoS level 3 of the QoS service.

The following describes, by using an example, a manner in which the first apparatus determines the first authorization information based on the indication information of the first authorization information. For example, the first apparatus stores the first authorization information, and optionally, the first apparatus further stores a correspondence between the first authorization information and the indication information of the first authorization information. The first apparatus may obtain the locally stored first authorization information based on the indication information of the first authorization information. In this example, the first apparatus may be a CCF or an AEF. For another example, the first apparatus does not store the first authorization information, and an apparatus #1 stores the first authorization information. The first apparatus may obtain the first authorization information from the apparatus #1 based on the indication information of the first authorization information. In this example, the first apparatus may be an AEF, and the apparatus #1 may be a CCF; or the first apparatus may be a CCF or an AEF, and the apparatus #1 is an apparatus that stores a database of authorization information.

In some possible manners, the first request further includes at least one of the following: indication information of the first user or indication information of the first service. The indication information of the first user may be an ID of the first user, or may be an ID of a terminal corresponding to the first user, for example, a GPSI or an SUPI of the first user. The indication information of the first service may be an API service ID corresponding to the first service.

In some examples, at least one of the indication information of the first user or the indication information of the first service may be included in the first authorization information in the first request. For specific content of the first authorization information, refer to the foregoing description of the first authorization information. Details are not described herein again. For example, the first authorization information is a token #1, the indication information of the first user may be a user ID in a claim of the token #1, and the indication information of the first service may be an API service ID in the claim of the token #1 or an API service ID in a scope in the claim of the token #1.

In some other examples, at least one of the indication information of the first user or the indication information of the first service may be included in an information element (information element, IE) other than the first authorization information in the first request. In this way, the first apparatus can determine that the first request is a request specific to the first service for the first user, without parsing the first authorization information.

Optionally, in S301, when the first apparatus is a CCF, the first apparatus may directly receive the first request from the second apparatus. When the first apparatus is an AEF, the first apparatus may directly receive the first request from the second apparatus, or may receive the first request from the second apparatus through a CCF.

It should be understood that the first request may be an existing message (for example, a revocation request (revocation request)), or may be a new message. This is not limited in this application.

**S302:** The first apparatus determines at least one level of the first service based on the first request. The at least one level includes a second level, a resource corresponding to the second level of the first service is a first resource used to provide the first service for the first user, and the first resource is, for example, a PDU session. Optionally, the second level is different from the first level.

For example, the first service is a QoS service. The first level of the first service is a QoS level 3, and a resource corresponding to the QoS level 3 is a PDU session #1. The second level of the first service is a QoS level 4, and a resource corresponding to the QoS level 4 is a PDU session #2. In this way, after the first request is received, authorization for the QoS level 3 for the first user is revoked, the PDU session #1 is released, and the resource corresponding to the QoS level 4, namely, the PDU session #2, is established. A network side may provide the QoS service for the first user by using the PDU session #2, thereby avoiding interruption of the QoS service for the first user, and avoiding denial of service for the first user.

For another example, the first service is a QoS service. The first level of the first service is a QoS level 3, and a resource corresponding to the QoS level 3 is a QoS flow #1 of a PDU session #1. The second level of the first service is a QoS level 4. In this way, after the first request is received, authorization for the QoS level 3 for the first user is revoked, and the QoS flow #1 (a corresponding level is the QoS level 3) in the PDU session #1 is updated to a QoS flow #2 (corresponding to the QoS level 4) in the PDU session #1. A network side may provide the QoS service for the first user by using the QoS flow #2 in the PDU session #1, thereby avoiding interruption of the QoS service for the first user, and avoiding denial of service for the first user.

According to the method shown in FIG. 3, after receiving the first request used to request to revoke, for the first user, authorization for the first level of the first service, the first apparatus may determine the at least one level of the first service. The resource corresponding to the second level in the at least one level is the first resource used to provide the first service for the first user. In this way, after the authorization for the first level of the first service is revoked for the first user, a network side can still provide the first service for the first user by using the first resource, thereby avoiding interruption of the first service for the first user and avoiding denial of service for the first user.

In S302, the first apparatus may determine the at least one level of the first service in a plurality of manners, for example, manner a1, manner a2, or manner a3.

**Manner al:** Valid authorization of the first service for the first user includes authorization for at least two levels of the first service, and the at least two levels include the first level. The first apparatus may determine one or more levels other than the first level in the at least two levels as the at least one level.

In this application, the valid authorization of the first service for the first user is authorization that is in authorization of the first service for the first user and that is still in a validity period and is not revoked before the first request is received. For example (which is referred to as example 2 below), the authorization of the first service for the first user includes authorization indicated by a token #1 to a token #3. The token #1 includes: scope: {QoS: level=3}, and expiration time: {12/02/2023}, which indicate that the token #1 is authorization information of authorizing the QoS level 3 of the QoS service to the first user, and validity time expires on December 1, 2023. The token #2 includes: scope: {QoS: level=4}, and expiration time: {05/31/2023}, which indicate that the token #2 is authorization information of authorizing the QoS level 4 of the QoS service to the first user, and validity time expires on May 30, 2023. The token #3 includes: scope: {QoS: level=2}, and expiration time: {09/09/2023}, which indicate that the token #3 is authorization information of authorizing the QoS level 2 of the QoS service to the first user, and validity time expires on September 8, 2023. If time at which the first apparatus receives the first request is July 22, 2023, the valid authorization of the first service for the first user includes authorization indicated by the token #1 and the token #3, that is, includes authorization of authorizing the QoS level 3 and the QoS level 2 of the QoS service to the first user. In this case, the at least two levels include the QoS level 3 and the QoS level 2.

Optionally, in manner a1, the first apparatus may determine the at least one level of the first service by using the following steps A1 to A3.

A1: The first apparatus determines the first user based on the first request.

In some examples, the first request includes the indication information of the first user. For specific content of the indication information of the first user, refer to the description of the indication information of the first user in S301. Details are not described herein again. In this way, the first apparatus may determine the first user based on the indication information of the first user.

In some other examples, the first request includes the indication information of the first authorization information. The first apparatus determines the first authorization information based on the indication information of the first authorization information. For a determining manner, refer to S301. Details are not described herein again. Then, the first apparatus may determine the first user based on the indication information of the first user in the first authorization information. For example, the first authorization information is a token #1, the indication information of the first user is a user ID #1 in a claim of the token #1, and the first apparatus may determine that the first user is a user corresponding to the user ID #1.

A2: The first apparatus determines the first service based on the first request.

In some examples, the first request includes the indication information of the first service. For specific content of the indication information of the first service, refer to the description of the indication information of the first service in S301. Details are not described herein again. In this way, the first apparatus may determine the first service based on the indication information of the first service.

In some other examples, the first request includes the indication information of the first authorization information. The first apparatus determines the first authorization information based on the indication information of the first authorization information. For a determining manner, refer to S301. Details are not described herein again. Then, the first apparatus may determine the first service based on the indication information of the first service in the first authorization information. For example, the first authorization information is a token #1, the indication information of the first service is an API service ID #1 in a claim of the token #1, and the first apparatus may determine that the first service is a service corresponding to the API service ID #1. An execution sequence of steps A1 and A2 is not limited in this application.

A3: The first apparatus determines the at least one level of the first service for the first user based on the first user and the first service.

Optionally, step A3 includes steps A3-1 and A3-2.

A3-1: The first apparatus determines at least one piece of authorization information based on the first user and the first service.

Each piece of authorization information in the at least one piece of authorization information may include the indication information of the first user and the indication information of the first service, and each piece of authorization information in the at least one piece of authorization information is authorization information of authorizing one or more levels of the first service to the first user. For example, the first user is a user corresponding to a user ID #1, and the first service is a service corresponding to an API service ID #1. The first apparatus may select M tokens, each of the M tokens includes the user ID #1 and the API service ID #1, each of the M tokens is a token of authorizing one or more levels of the first service to the first user, and M is a positive integer. In this case, the first apparatus may determine the M tokens as the at least one piece of authorization information.

Optionally, the at least one piece of authorization information is authorization information corresponding to the valid authorization of the first service for the first user. For example, the first user is a user corresponding to a user ID #1, and the first service is a service corresponding to an API service ID #1. The first apparatus may select M tokens, each of the M tokens includes the user ID #1 and the API service ID #1, and each of the M tokens is a token of authorizing one or more levels of the first service to the first user. If the M tokens are the token #1 to the token #3 in example 2, and time at which the first apparatus receives the first request is July 22, 2023, the first apparatus may determine that the at least one piece of authorization information includes the token #1 and the token #3.

A3-2: The first apparatus determines the at least one level of the first service based on the at least one piece of authorization information.

The at least one level may be a difference set between the first level and a union set of levels that are indicated by the at least one piece of authorization information and for which the first service is authorized to the first user. For example, the at least one piece of authorization information includes the token #1 and the token #3 in example 2, the token #1 is authorization information of authorizing the QoS level 3 of the QoS service to the first user, and the token #3 is authorization information of authorizing the QoS level 2 of the QoS service to the first user. If the first level is the QoS level 3, the first apparatus may determine that the at least one level of the first service includes the QoS level 2.

Optionally, the first apparatus may first determine a difference set between the first authorization information and a union set of the at least one piece of authorization information, to obtain a first set of authorization information, and then determine the at least one level based on the first set. For specific content of the first authorization information, refer to the description of the first authorization information in S301. Details are not described herein again. For example, the at least one piece of authorization information includes the token #1 and the token #3 in example 2, and the first authorization information is the token #1. In this case, the union set of the at least one piece of authorization information is {token #1, token #3}. The difference set between the first authorization information and the union set of the at least one piece of authorization information is {token #3}, and the difference set is the first set. The token #3 is authorization information of authorizing the QoS level 2 of the QoS service to the first user. Therefore, the first apparatus may determine that the at least one level of the first service includes the QoS level 2.

In manner a1, the first apparatus can quickly determine the at least one level of the first service based on the valid authorization of the first service for the first user.

As described above, the at least one level may include the second level. The second level may be determined in a plurality of manners, for example, manner b1 or manner b2.

**Manner b1:** The first apparatus sends information indicating the at least one level, and correspondingly, a third apparatus receives the information indicating the at least one level. In this way, the third apparatus may select the second level from the at least one level.

Optionally, the first apparatus may be a CCF, and the third apparatus may be an AEF.

For example, the information indicating the at least one level includes at least one of the following: 1. Indication information of the at least one level: In some possible manners, the level of the first service is a QoS level, and the indication information of the at least one level may be a value of the QoS level. For example, when the at least one level includes a QoS level 2, the indication information of the at least one level includes 2. In some other possible manners, the level of the first service is a 5QI value or a QFI value, and the indication information of the at least one level may be the 5QI value or the QFI value. For example, when the at least one level includes 5QI=3 (or QFI=3), the indication information of the at least one level includes 3.

2. Information corresponding to the at least one level: For example, the level of the first service is a 5QI value, and the information corresponding to the at least one level may be a value corresponding to the 5QI value. For example, when the at least one level includes 5QI=6, and 5QI=6 corresponds to indication information 3, the indication information of the at least one level may include 3. In this way, information transmitted between communication apparatuses is not a 5QI value, and the second apparatus does not need to know a 5QI value actually used in a network, thereby avoiding leakage of 5QI value information.

The following describes how the third apparatus selects the second level from the at least one level. In some possible manners, if the at least one level includes one level, the level is the second level. For example, if the at least one level includes a QoS level 2, the second level is the QoS level 2.

In some other possible manners, valid authorization of the first service for the first user includes authorization for at least two levels of the first service, the at least one level includes N levels other than the first level in the at least two levels, and N is an integer greater than or equal to 2. In other words, the at least one level includes two or more levels. The third apparatus may select the second level from the N levels according to a first rule, where the first rule is a rule for selecting the second level from the N levels.

For example, the first rule includes at least one of the following:
Rule 1: The second level is a highest-quality level in the N levels that is satisfiable by a network in which the first apparatus is located. The rule 1 may also be referred to as a best effort (best effort) rule. For example, the N levels include a QoS level 3 and a QoS level 1, and the third apparatus may first determine whether the network can satisfy the QoS level 3. If the network can satisfy the QoS level 3, the third apparatus may determine that the second level is the QoS level 3; or if the network cannot satisfy the QoS level 3, the third apparatus may determine that the second level is the QoS level 1.
Rule 2: The second level is a latest authorized level in the N levels. For example, the N levels include a QoS level 3 and a QoS level 1. Issuance time of a token corresponding to the QoS level 3 is later than issuance time of a token corresponding to the QoS level 1. In other words, authorization time of the QoS level 3 is later than authorization time of the QoS level 1. The third apparatus may determine that the second level is the QoS level 3.
Rule 3: The second level is any one of the N levels. For example, the N levels include a QoS level 3 and a QoS level 1. The third apparatus may randomly select a level from the QoS level 3 and the QoS level 1 as the second level.

The third apparatus may determine the first rule in a plurality of manners, for example, manner c1 or manner c2.

**Manner** cl: The first apparatus sends first indication information, where the first indication information indicates the first rule. Correspondingly, the third apparatus receives the first indication information. In this way, the third apparatus may determine the first rule based on the first indication information.

The first indication information may directly indicate the first rule. For example, the first indication information includes the first rule. Alternatively, the first indication information may indirectly indicate the first rule. For example, there is a correspondence between the first indication information and the first rule.

It should be understood that the information indicating the at least one level and the first indication information may be carried in a same message (for example, a revocation request), or may be carried in different messages.

In manner c1, the third apparatus may quickly and accurately determine the first rule based on the first indication information.

**Manner c2:** The first rule is preset. For example, the first rule is stipulated in a protocol. In this way, the third apparatus may obtain the preset first rule.

In some possible manners, in manner b1, after the second level is selected, the third apparatus may trigger establishment of the first resource corresponding to the second level. The third apparatus is, for example, an AEF. After the second level is selected, the AEF may interact with a 3GPP core network to update a resource. For example, the AEF may negotiate with a network element such as a PCF to establish or update a PDU session or a QoS flow corresponding to the second level. A process of establishing the first resource corresponding to the second level is not limited in this application. For another example, for a QoS service API (QoS service API), the AEF may notify a network element such as a PCF and/or an SMF to modify a corresponding PDU session based on a selected QoS level. The selected QoS level may be the second level selected after authorization for a first QoS level is revoked.

In manner b1, the first apparatus may send the information indicating the at least one level related to the first service, so that the third apparatus can select the second level from the at least one level. In this way, after the authorization for the first level of the first service is revoked, a network may provide the first service for the first user by using the first resource corresponding to the second level of the first service, thereby avoiding interruption of the first service for the first user.

In addition, in this manner, the third apparatus may determine the second level, and the first apparatus does not need to determine the second level, so that a calculation amount of the first apparatus can be reduced, and calculation resources of the first apparatus can be saved.

**Manner b2:** The first apparatus selects the second level from the at least one level.

For specific content of selecting the second level by the first apparatus from the at least one level, refer to the description of "the third apparatus selects the second level from the at least one level" in manner b1. Only the third apparatus is replaced with the first apparatus. No repeated description is provided. When the first apparatus selects the second level from the N levels according to the first rule, the first rule may be preset, or may be obtained by the first apparatus from another apparatus.

In some possible manners, after the second level is selected, the first apparatus may trigger establishment of the first resource corresponding to the second level. The first apparatus is, for example, an AEF. After the second level is selected, the AEF may interact with a 3GPP core network to update a resource. For specific content of the AEF interacting with the 3GPP core network to update the resource, refer to the description of the AEF interacting with the 3GPP core network to update the resource in manner b1. Details are not described herein again.

In some other possible manners, after the second level is selected, the first apparatus may send information indicating the second level. Correspondingly, the third apparatus may receive the information indicating the second level. In this way, the third apparatus may determine the second level based on the information indicating the second level. Optionally, the first apparatus may be a CCF, and the third apparatus may be an AEF. For example, the information indicating the second level includes at least one of the following: the indication information of the second level; or the information corresponding to the second level. For specific content of the information indicating the second level, refer to the description of "information indicating the at least one level" in manner b1. Only the at least one level is replaced with the second level. Details are not described herein again.

Optionally, after the second level is determined, the third apparatus may trigger establishment of the first resource corresponding to the second level. The third apparatus is, for example, an AEF. After the second level is determined, the AEF may interact with a 3GPP core network to update a resource. For specific content of the AEF interacting with the 3GPP core network to update the resource, refer to the description of the AEF interacting with the 3GPP core network to update the resource in manner b1. Details are not described herein again.

In manner b2, the first apparatus may select the second level from the at least one level. In this way, after the authorization for the first level of the first service is revoked, a network may provide the first service for the first user by using the first resource corresponding to the second level of the first service, thereby avoiding interruption of the first service for the first user.

In addition, in this manner, the first apparatus determines the at least one level and the second level. In this way, the first apparatus may transmit information indicating the second level, and does not need to transmit indication information of a level other than the second level in the at least one level, thereby saving transmission resources and reducing signaling overheads.

**Manner a2:** Valid authorization of the first service for the first user includes authorization for one level of the first service, and the level is the first level. The first apparatus may determine a specified second level as the at least one level of the first service.

For specific content of the valid authorization of the first service for the first user, refer to the description of "valid authorization of the first service for the first user" in manner al. Details are not described herein again. The specified second level may be a default level. For example, the valid authorization of the first service for the first user includes authorization indicated by a token #1, and the token #1 includes: scope: {QoS: level=3}, and expiration time: {12/02/2023}. The specified second level is a QoS level 1. If the first request is used to request to revoke, for the first user, authorization for the QoS level 3 of a QoS service, the first apparatus may determine the QoS level 1 as the at least one level of the first service.

In some possible manners, after the specified second level is determined as the at least one level, the first apparatus may trigger establishment of the first resource corresponding to the second level. The first apparatus is, for example, an AEF. After the specified second level is determined as the at least one level, the AEF may interact with a 3GPP core network to update a resource. For specific content of the AEF interacting with the 3GPP core network to update the resource, refer to the description of the AEF interacting with the 3GPP core network to update the resource in manner b1. Details are not described herein again.

In some other possible manners, after the specified second level is determined as the at least one level, the first apparatus may send information indicating the second level. Correspondingly, the third apparatus may receive the information indicating the second level. In this way, the third apparatus may determine the second level based on the information indicating the second level. For specific content of this manner, refer to the description of "the first apparatus may send information indicating the second level" in manner b2. Details are not described herein again.

In manner a2, the first apparatus may determine the specified second level as the at least one level. In this way, after the authorization for the first level of the first service is revoked for the first user, a network may provide the first service for the first user by using the first resource corresponding to the second level, thereby avoiding interruption of the first service for the first user.

**Manner a3:** The second apparatus sends first information to the first apparatus, where the first information indicates the second level. The first information may be carried in the first request, or may be carried in another message. The first apparatus determines the second level as the at least one level.

Optionally, the first information is indication information of the second level, or the first information is information corresponding to the second level, and valid authorization of the first service for the first user includes authorization for the second level of the first service. For specific content of the valid authorization of the first service for the first user, refer to the description of "valid authorization of the first service for the first user" in manner a1.

In some examples, the first information is a value of the second level. For example, if the first information is 3, it indicates that the second level is a QoS level 3.

In some other examples, the first information may be second authorization information or indication information of the second authorization information. The second authorization information is authorization information of authorizing the second level of the first service to the first user. The indication information of the second authorization information is, for example, an ID of the second authorization information. For example, if the first information is a token #3 or indication information of the token #3, and the token #3 is authorization information of authorizing a QoS level 2 of a QoS service to the first user, the second level is the QoS level 2.

In some other examples, the first information is a "default (default)" value. A correspondence between the default value and the second level may be preconfigured. For example, if the default value corresponds to a QoS level 1, the second level is the QoS level 1. For another example, if the default value corresponds to a 5QI 1, the second level is the 5QI 1.

In some possible manners, after the second level is determined as the at least one level, the first apparatus may trigger establishment of the first resource corresponding to the second level. The first apparatus is, for example, an AEF. After the second level is determined as the at least one level, the AEF may interact with a 3GPP core network to update a resource. For specific content of the AEF interacting with the 3GPP core network to update the resource, refer to the description of the AEF interacting with the 3GPP core network to update the resource in manner b1. Details are not described herein again.

In some other possible manners, after the specified second level is determined as the at least one level, the first apparatus may send information indicating the second level. Correspondingly, the third apparatus may receive the information indicating the second level. In this way, the third apparatus may determine the second level based on the information indicating the second level. For specific content of this manner, refer to the description of "the first apparatus may send information indicating the second level" in manner b2. Details are not described herein again.

In manner a3, the second apparatus may send, to the first apparatus, the information indicating the second level. In this way, the first apparatus does not need to determine the second level through calculation, thereby reducing a calculation amount of the first apparatus, and saving calculation resources of the first apparatus. In addition, after the authorization for the first level of the first service is revoked for the first user, a network may provide the first service for the first user by using the first resource corresponding to the second level, thereby avoiding interruption of the first service for the first user.

In some possible manners, in the foregoing manner a1, manner a2, or manner a3, the first apparatus may further send at least one of the following: indication information of the first user or indication information of the first service. Correspondingly, the third apparatus may receive at least one of the following: the indication information of the first user or the indication information of the first service. In this way, the third apparatus may determine the first service for the first user, and trigger establishment of the first resource corresponding to the second level. For specific content of the indication information of the first user and the indication information of the first service, respectively refer to the descriptions of the indication information of the first user and the indication information of the first service in S301. Details are not described herein again.

An embodiment of this application provides another communication method. The method is a possible example of the method shown in FIG. 3. Refer to a flowchart shown in FIG. 4. The following specifically describes a procedure of the method by using an example in which a first apparatus is a CCF, a second apparatus is an API invoker, and a third apparatus is an AEF.

S401: The API invoker obtains a token #a1 from the CCF, where the token #a1 is a token for a first user. The API invoker provides the token #a1 for the AEF, and the AEF, a PCF, and an SMF perform negotiation, to allocate a resource to a terminal corresponding to the first user.

Optionally, the API invoker may be an apparatus that can perform at least one of the following operations on behalf of the first user: initiating a request for invoking a service API, obtaining service API information, invoking a service API, or obtaining a corresponding service. Before performing the foregoing operation, the API invoker may first obtain authorization from the first user.

A service #a1 corresponding to the token #a1 may be a service of a first type, or may be a service of a second type. The service of the first type may also be referred to as a service of a switch type, and a network side may authorize or not authorize the service of the first type to the first user. For example, the service of the first type includes providing user location information, and the network side may authorize or not authorize provision of user location information to the first user. The service of the second type may also be referred to as a service of a plurality of levels, and the network side may authorize one or more levels of the service of the second type to the first user. For example, the service of the second type includes a QoS service, and the network side may authorize a first level of the QoS service to the first user.

When the service #a1 corresponding to the token #a1 is the service of the first type, the token #a1 may be a token of authorizing the service #a1 to the first user. When the service #a1 corresponding to the token #a1 is the service of the second type, the token #a1 may be a token of authorizing a first level of the service #a1 to the first user.

S402: The API invoker sends a revocation request #1 to the CCF, where the revocation request #1 is used to request to revoke the token #a1.

There may be a plurality of conditions for triggering the API invoker to send the revocation request #1. For example, the API invoker may send the revocation request #1 when the terminal detects at least one of the following operations of the first user: logging out, or revoking or modifying an API service. A condition for triggering the API invoker to send the revocation request #1 is not limited in this application.

For specific content of the revocation request #1, refer to the description of the first request in S301. Details are not described herein again.

Optionally, the revocation request #1 further includes indication information #1, and the indication information #1 indicates whether a type of the service #a1 corresponding to the token #a1 is the first type or the second type. For example, when a value of the indication information #1 is a first value (for example, 0), the type of the service #a1 corresponding to the token #al is the first type; or when a value of the indication information #1 is a second value (for example, 1), the type of the service #a1 corresponding to the token #a1 is the second type.

In some possible manners, after receiving the revocation request #a1, the CCF may revoke the token #a1. For example, when the token #a1 is a token of authorizing the service #a1 to the first user, the CCF may revoke authorization of the service #a1 to the first user. For another example, when the token #a1 is a token of authorizing the first level of the service #a1 to the first user, the CCF may revoke, for the first user, authorization for the first level of the service #a1.

S403: The CCF determines whether the type of the service #a1 corresponding to the token #a1 is the first type or the second type. When the type of the service #a1 is the first type, the method shown in FIG. 4 further includes S404. When the type of the service #a1 is the second type, the method shown in FIG. 4 further includes S405 to S413.

In some examples, the CCF may determine, based on an API service ID in a claim of the token #a1, whether the type of the service #a1 is the first type or the second type. For example, when the API service ID indicates that the service #a1 is providing user location information, the CCF may determine that the type of the service #a1 is the first type. For another example, when the API service ID indicates that the service #a1 is a QoS service, the CCF may determine that the type of the service #a1 is the second type.

In some other examples, the CCF may determine, based on the indication information #1 in S402, whether the type of the service #a1 is the first type or the second type. For a correspondence between the indication information #1 and the type of the service #a1, refer to the description in S402. Details are not described herein again.

S403 is an optional step. For example, in some possible implementations, regardless of whether the type of the service #a1 is the first type or the second type, S405 to S413 may be performed on the token #a1. In some other possible implementations, the CCF supports only the service of the second type. In this way, after S402, S405 to S413 may be performed.

S404: The CCF sends a revocation request #a2 to the AEF.

The AEF may be an AEF corresponding to an AEF ID in the claim of the token #a1. It should be understood that the AEF ID in the claim of the token #a1 may correspond to one or more AEFs, and each AEF may perform processing by using the method shown in FIG. 4.

In some examples, the revocation request #a2 may include the token #a1 or indication information (for example, a token ID) of the token #a1. In this way, after receiving the revocation request #a2, the AEF may determine that the revocation request #a2 is used to request to release a resource corresponding to the token #a1.

In some other examples, the revocation request #a2 may include indication information of the first user and indication information of the service #a1. In this way, after receiving the revocation request #a2, the AEF may determine the token #a1 based on the indication information of the first user and the indication information of the service #a1, and then determine that the revocation request #a2 is used to request to release the resource corresponding to the token #a1. For specific content of the indication information of the first user and the indication information of the service #a1, respectively refer to the descriptions of the indication information of the first user and the indication information of the first service in S301. Details are not described herein again.

Optionally, after receiving the revocation request #a2, the AEF may trigger release of the resource corresponding to the token #a1, for example, start a procedure of canceling subscription to the service #a1 by the first user. A specific process of releasing the resource corresponding to the token #a1 and a specific procedure of starting to cancel the subscription to the service #al by the first user are not limited in this application.

S405: The CCF determines at least one level of the service #a1 corresponding to the token #a1.

For specific content of S405, refer to manner a1 and manner a2. Only the service #a1 is replaced with the first service. Details are not described herein again.

S406: The CCF sends a service update request to the AEF.

In some possible manners, the service update request may include information indicating the at least one level. For specific content of the information indicating the at least one level, refer to the description of the information indicating the at least one level in manner b1. Details are not described herein again.

Optionally, the service update request further includes the indication information of the first user and/or the indication information of the service #a1. For specific content of the indication information of the first user and the indication information of the service #a1, respectively refer to the descriptions of the indication information of the first user and the indication information of the first service in S301. Details are not described herein again.

In some examples, valid authorization of the service #a1 for the first user includes authorization for at least two levels of the service #a1, the at least one level includes N levels other than the first level in the at least two levels, and N is an integer greater than or equal to 2. The service update request further includes first indication information, and the first indication information indicates a first rule. The first rule is a rule used to select a second level from the N levels. For specific content of the first rule, refer to the description of the first rule in manner b1. Details are not described herein again.

After receiving the information indicating the at least one level, the AEF may select the second level from the at least one level. For a selection manner, refer to the description of "the third apparatus selects the second level from the at least one level" in manner b1. Details are not described herein again.

In some other possible manners, the service update request may include information indicating the second level. The second level may be selected by the CCF from the at least one level. For a selection manner, refer to manner b2. Details are not described herein again. For specific content of the information indicating the second level, refer to the description of the information indicating the second level in manner b2. Details are not described herein again.

S407: The AEF sends a policy update request #1 to the PCF, where the policy update request #1 may be used to request to execute the following policy: modifying the resource corresponding to the service #a1 to a resource corresponding to the second level.

Optionally, the policy update request #1 includes at least one of the following: the indication information of the first user, the indication information of the service #a1, or the information indicating the second level. For example, in the policy update request #1, the indication information of the first user is indication information of a user #1, the indication information of the service #a1 indicates that the service #a1 is a QoS service, and the information indicating the second level indicates that the second level is a QoS level 3. In this way, the PCF may determine to establish a resource corresponding to the QoS level 3 of the QoS service for the user #1.

In this application, the information indicating the second level in the policy update request #1 may be the same as or different from the information that is obtained by the AEF from the CCF and that indicates the second level.

In some examples, the information that is obtained by the AEF from the CCF and that indicates the second level is a value of the QoS level 3. In the policy update request #1, the information indicating the second level is the value of the QoS level 3. According to Table 1 above, the PCF may map the QoS level 3 to a 5QI 6. In this way, the PCF may determine to establish a resource corresponding to the 5QI 6 of the QoS service.

In some other examples, the information that is received by the AEF from the CCF and that indicates the second level may be information corresponding to a 5QI value, and the information that is in the policy update request #1 and that indicates the second level may be the 5QI value.

For example, the information that is obtained by the AEF from the CCF and that indicates the second level is a value of the QoS level 3. According to Table 1 above, the AEF may map the QoS level 3 to a 5QI 6. The information that is in the policy update request #1 and that indicates the second level may be a value of the 5QI 6.

S408: The PCF sends a policy update request #2 to the SMF, where the policy update request #2 may be used to request to execute the following policy: modifying the resource corresponding to the service #a1 to the resource corresponding to the second level.

Optionally, the policy update request #2 may include at least one of the following: the indication information of the first user, the indication information of the service #a1, or the information indicating the second level.

In some possible manners, the policy update request #1 and the policy update request #2 may include the same or different information indicating the second level. For example, the information indicating the second level in both the policy update request #1 and the policy update request #2 is a QoS level 3. For another example, in the policy update request #1, the information indicating the second level is a QoS level 3; and in the policy update request #2, the information indicating the second level is a value of a 5QI 6 corresponding to the QoS level 3.

S409: The SMF initiates a resource modification procedure, to modify the resource corresponding to the service #a1 to the resource corresponding to the second level.

For example, the resource modification procedure is a PDU session establishment procedure or a PDU session modification procedure. In the resource modification procedure, QoS is modified to the 5QI 6 for the second level.

In a possible implementation, the SMF initiates a PDU session establishment procedure, to set QoS of a PDU session corresponding to the service #a1 of the first user or QoS of a QoS flow in the PDU session to the second level, and initiates a release procedure of a PDU session or a QoS flow of the PDU session for the first level of the service #a1, to release the PDU session or the QoS flow corresponding to the first level. For example, the first level of the service #a1 of the first user is a 5QI 3, and the 5QI 3 corresponds to a PDU session #1. The second level of the service #a1 of the first user is a 5QI 6. The SMF initiates a PDU session establishment procedure to establish a PDU session #2. QoS of PDU session #2 is the 5QI 6. The first user may obtain the service #a1 by using the PDU session #2. The SMF may further initiate a PDU session release procedure to release the PDU session #1. For another example, the first level of the service #a1 of the first user is a 5QI 3, and the 5QI 3 corresponds to a QoS flow #1 of a PDU session #1. The second level of the service #a1 of the first user is a 5QI 6. The SMF initiates a PDU session establishment procedure to establish a QoS flow #2 in a PDU session #2. QoS of QoS flow #2 is the 5QI 6. The first user may obtain the service #a1 by using the PDU session #2. The SMF may further initiate a PDU session release procedure to release the QoS flow #1 in the PDU session #1. In another possible implementation, the SMF initiates a PDU session modification procedure, to modify, to the second level, QoS of a PDU session corresponding to the service #a1 of the first user or QoS of a QoS flow of the PDU session. For example, the first level of the service #a1 of the first user is a 5QI 3, and the 5QI 3 corresponds to a PDU session #1. The second level of the service #a1 of the first user is a 5QI 6. The SMF initiates a PDU session modification procedure to modify QoS of the PDU session #1 to the 5QI 6. The first user may obtain the service #a1 by using the PDU session #1. For another example, the first level of the service #a1 of the first user is a 5QI 3, and the 5QI 3 corresponds to a QoS flow #1 of a PDU session #1. The second level of the service #a1 of the first user is a 5QI 6. The SMF initiates a PDU session modification procedure to modify QoS of the QoS flow #1 to the 5QI 6. The first user may obtain the service #a1 by using the QoS flow #1.

S410: The SMF sends a policy update response #2 to the PCF.

The policy update response #2 is a response message to the policy update request #2, and may indicate that the policy requested by the policy update request #2 has been executed, that is, the resource corresponding to the service #a1 has been modified to the resource corresponding to the second level.

S411: The PCF sends a policy update response #1 to the AEF.

The policy update response #1 is a response message to the policy update request #1, and may indicate that the policy requested by the policy update request #1 has been executed, that is, the resource corresponding to the service #a1 has been modified to the resource corresponding to the second level.

S412: The AEF sends a service update response to the CCF.

The service update response is a response message to the service update request, and may indicate that the resource corresponding to the service #a1 has been modified to the resource corresponding to the second level. Optionally, the service update response includes the indication information of the service #a1. In this way, after receiving the service update response, the CCF may determine that the resource corresponding to the service #a1 has been modified to the resource corresponding to the second level.

S413: The CCF sends a revocation response (revocation response) #1 to the API invoker, where the revocation response #1 indicates that the token #a1 has been revoked.

S401 to S413 are optional steps.

In the method shown in FIG. 4, for the token #a1, the AEF may receive the revocation request #a2 in S404, or may receive the service update request in S406. An operation after the AEF receives the revocation request #a2 is different from an operation after the AEF receives the service update request. Therefore, the AEF needs to determine whether a received message is the revocation request #a2 or the service update request. In some examples, a message type of the revocation request #a2 is different from a message type of the service update request. The AEF may determine, based on a type of the received message, whether the received message is the revocation request #a2 or the service update request. In some other examples, the revocation request #a2 may include indication information #2, the service update request may include indication information #3, and the indication information #2 is different from the indication information #3. If the message received by the AEF includes the indication information #2, the AEF may determine that the received message is the revocation request #a2. If the message received by the AEF includes the indication information #3, the AEF may determine that the received message is the service update request. Specific forms of the indication information #2 and the indication information #3 are not limited in this application.

According to the method shown in FIG. 4, when the service #a1 is a service of a plurality of levels, after receiving a request used to request to revoke, for the first user, authorization for the first level of the service #a1, the CCF may determine the at least one level of the service #al. The resource corresponding to the second level in the at least one level is a resource used to provide the service #a1 for the first user. In this way, after the authorization for the first level of the service #a1 is revoked for the first user, a network side can still provide the service #a1 for the first user by using the resource corresponding to the second level, thereby avoiding interruption of the service #a1 for the first user and avoiding denial of service for the first user.

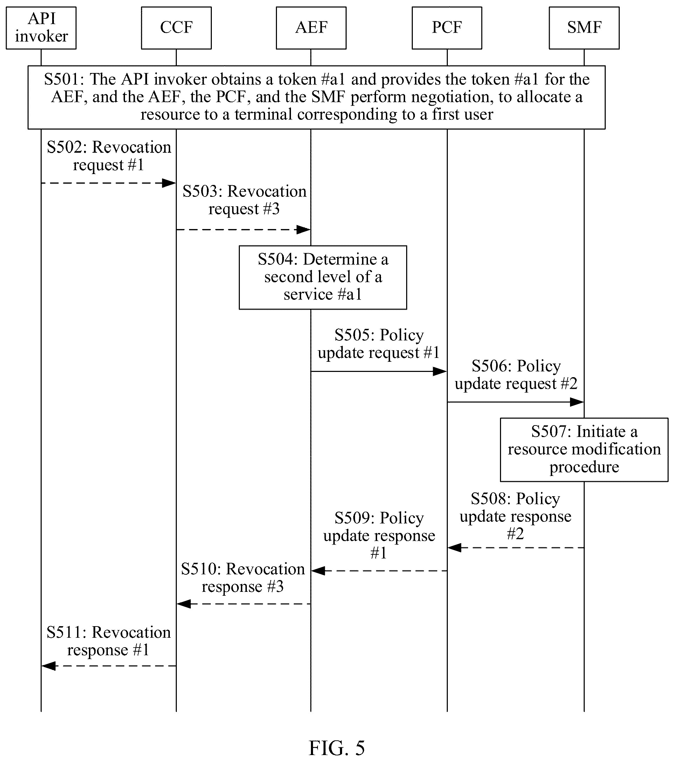

An embodiment of this application provides another communication method. The method is another possible example of the method shown in FIG. 3. Refer to a flowchart shown in FIG. 5. The following specifically describes a procedure of the method by using an example in which a first apparatus is an AEF and a second apparatus is an API invoker.

S501: The API invoker obtains a token #a1 from a CCF, where the token #a1 is a token for a first user. The API invoker provides the token #a1 for the AEF, and the AEF, a PCF, and an SMF perform negotiation, to allocate a resource to a terminal corresponding to the first user.

S502: The API invoker sends a revocation request #1 to the CCF, where the revocation request #1 is used to request to revoke the token #a1.

For specific content of S501 and S502, refer to S401 and S402. Details are not described herein again.

In some possible manners, after receiving the revocation request #1, the CCF may determine service indication information (for example, an API service ID) of a service #a1 corresponding to the token #a1 and indication information of the first user (for example, an ID of the first user or an ID of a terminal corresponding to the first user). In some examples, the CCF may determine the service indication information of the service #a1 based on a service indication information claim of the token #a1. In some other examples, the CCF may determine the service indication information of the service #a1 based on a scope claim of the token #a1, where the scope claim includes the service indication information of the service #a1. This is not limited in this application. S503: The CCF sends a revocation request #3 to the AEF.

In some possible manners, the revocation request #3 is used to request to revoke the token #a1. For specific content of the revocation request #3, refer to the revocation request #1. Details are not described herein again.

In some other possible manners, the revocation request #3 is used to request to revoke a service authorized by the token #a1. The revocation request #3 may include the service indication information of the service #a1 and the indication information of the first user. For specific content of the service indication information of the service #a1 and the indication information of the first user, refer to the description in S502. Details are not described herein again.

S504: The AEF determines a second level of the service #a1.

The service #a1 corresponds to the token #a1 or an API service ID. The service #a1 corresponding to the API service ID is also essentially corresponding to the token #a1. For brevity, this is not distinguished in the following description, and a service #a1 is collectively referred to as the service #a1 corresponding to the token #a1.

The AEF determines at least one level of the service #a1 corresponding to the token #a1, and selects the second level from the at least one level. For specific content of determining the at least one level by the AEF, refer to manner a1 and manner a2. Only the service #a1 is replaced with the first service. For specific content of selecting the second level by the AEF from the at least one level, refer to the description of "the third apparatus selects the second level from the at least one level" in manner b1. Details are not described herein again.

Optionally, before determining the at least one level, the AEF may first determine that a type of the service #a1 corresponding to the token #a1 is a second type. For specific content of determining, by the AEF, that the type of the service #a1 is the second type, refer to S403. Details are not described herein again.

S505: The AEF sends a policy update request #1 to the PCF, where the policy update request #1 may be used to request to execute the following policy: modifying the resource corresponding to the service #a1 to a resource corresponding to the second level.

S506: The PCF sends a policy update request #2 to the SMF, where the policy update request #2 may be used to request to execute the following policy: modifying the resource corresponding to the service #a1 to the resource corresponding to the second level.

S507: The SMF initiates a resource modification procedure, to modify the resource corresponding to the service #a1 to the resource corresponding to the second level.

S508: The SMF sends a policy update response #2 to the PCF.

S509: The PCF sends a policy update response #1 to the AEF.

S508 and S509 are optional steps.

For specific content of S505 to S509, refer to S407 to S411. Details are not described herein again. S510: The AEF sends a revocation response #3 to the CCF.

The revocation response #3 is a response message to the revocation request #3, and may indicate that the resource corresponding to the service #a1 has been modified to the resource corresponding to the second level. Optionally, the revocation response #3 includes the indication information of the service #a1. In this way, after receiving the revocation response #3, the CCF may determine that the resource corresponding to the service #a1 has been modified to the resource corresponding to the second level.

S511: The CCF sends a revocation response #1 to the API invoker, where the revocation response #1 indicates that the token #a1 has been revoked.

In the method shown in FIG. 5, S502 and S503, and S510 and S511 are optional steps. For example, S502 and S503 may be replaced with the following: The API invoker directly sends a revocation request #4 to the AEF, where the revocation request #4 is used to request to revoke the token #a1. For specific content of the revocation request #4, refer to the revocation request #1. Details are not described herein again. S510 and S511 may be replaced with the following: The AEF directly sends a revocation response #4 to the API invoker. For specific content of the revocation response #4, refer to the revocation response #1. Details are not described herein again. In this way, the CCF does not need to forward information between the API invoker and the AEF, thereby saving communication resources of the CCF and reducing energy consumption of the CCF.

According to the method shown in FIG. 5, when the service #a1 is a service of a plurality of levels, after receiving a request used to request to revoke, for the first user, authorization for the first level of the service #a1, the AEF may determine the second level of the service #a1. The resource corresponding to the second level is a resource used to provide the service #a1 for the first user. In this way, after the authorization for the first level of the service #a1 is revoked for the first user, a network side can still provide the service #a1 for the first user by using the resource corresponding to the second level, thereby avoiding interruption of the service #a1 for the first user and avoiding denial of service for the first user.

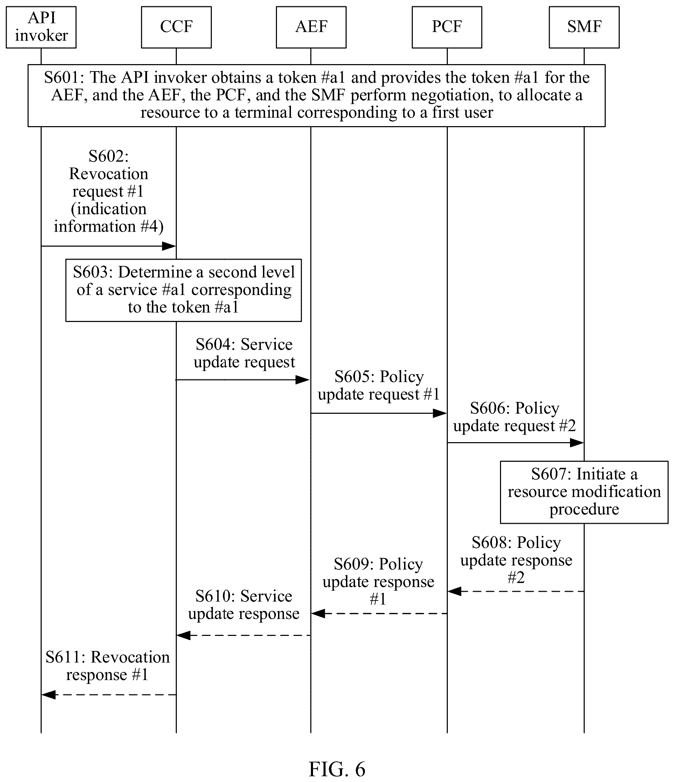

An embodiment of this application provides another communication method. The method is another possible example of the method shown in FIG. 3. Refer to a flowchart shown in FIG. 6. The following specifically describes a procedure of the method by using an example in which a first apparatus is a CCF, a second apparatus is an API invoker, and a third apparatus is an AEF. Compared with the method shown in FIG. 4, in the method shown in FIG. 6, a second level is indicated by the API invoker, and is not selected by the CCF or the AEF from at least one level.

S601: The API invoker obtains a token #a1 from the CCF, where the token #a1 is a token for a first user. The API invoker provides the token #a1 for the AEF, and the AEF, a PCF, and an SMF perform negotiation, to allocate a resource to a terminal corresponding to the first user.

For specific content of S601, refer to S401. No repeated description is provided. When a service #a1 corresponding to the token #a1 is a service of a second type, the token #a1 may be a token of authorizing a first level of the service #a1 to the first user.

S602: The API invoker sends a revocation request #1 to the CCF, where the revocation request #1 is used to request to revoke the token #a1. The revocation request #1 includes indication information #4.

For specific content of S602, refer to S402. No repeated description is provided.

In some examples, the indication information #4 may be first information indicating the second level. For specific content of the first information, refer to the description of the first information in manner a3. Details are not described herein again. When the indication information #4 is the first information, the CCF may perform an operation in S603.

In some other examples, the indication information #4 may include a null (null) value, which indicates to revoke, for the first user, authorization for the service #a1 corresponding to the token #a1 after the token #a1 is revoked. When the indication information #4 includes the null value, the CCF revokes, for the first user, authorization for the service #a1.

S603: The CCF determines, based on the first information, the second level of the service #a1 corresponding to the token #a1.

Optionally, before determining the second level, the CCF may determine that the type of the service #a1 is the second type. For specific content of determining, by the CCF, that the type of the service #a1 is the second type, refer to S403. Details are not described herein again.

S604: The CCF sends a service update request to the AEF.

S605: The AEF sends a policy update request #1 to the PCF, where the policy update request #1 may be used to request to execute the following policy: modifying the resource corresponding to the service #a1 to a resource corresponding to the second level.

S606: The PCF sends a policy update request #2 to the SMF, where the policy update request #2 may be used to request to execute the following policy: modifying the resource corresponding to the service #a1 to the resource corresponding to the second level.

S607: The SMF initiates a resource modification procedure, to modify the resource corresponding to the service #a1 to the resource corresponding to the second level.

S608: The SMF sends a policy update response #2 to the PCF.

S609: The PCF sends a policy update response #1 to the AEF.

S610: The AEF sends a service update response to the CCF.

S611: The CCF sends a revocation response #1 to the API invoker, where the revocation response #1 indicates that the token #a1 has been revoked.

S608 to S611 are optional steps.

For specific content of S604 to S611, refer to S406 to S413. Details are not described herein again. According to the method shown in FIG. 6, when the service #a1 is a service of a plurality of levels, after sending a request used to request to revoke, for the first user, authorization for the first level of the service #a1, the API invoker unit may further send, to the CCF, the first information indicating the second level. In this way, after the authorization for the first level of the service #a1 is revoked for the first user, a network side can still provide the service #a1 for the first user by using the resource corresponding to the second level, thereby avoiding interruption of the service #a1 for the first user and avoiding denial of service for the first user.

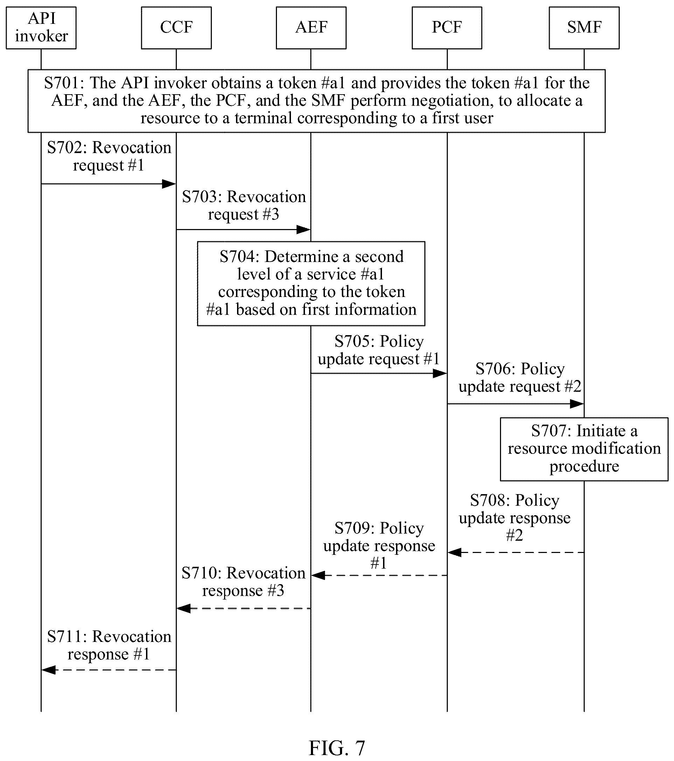

An embodiment of this application provides another communication method. The method is another possible example of the method shown in FIG. 3. Refer to a flowchart shown in FIG. 7. The following specifically describes a procedure of the method by using an example in which a first apparatus is an AEF and a second apparatus is an API invoker. Compared with the method shown in FIG. 5, in the method shown in FIG. 7, a second level is indicated by the API invoker, and is not selected by the CCF or the AEF from at least one level.

S701: The API invoker obtains a token #a1 from the CCF, where the token #a1 is a token for a first user. The API invoker provides the token #a1 for the AEF, and the AEF, a PCF, and an SMF perform negotiation, to allocate a resource to a terminal corresponding to the first user.

S702: The API invoker sends a revocation request #1 to the CCF, where the revocation request #1 is used to request to revoke the token #a1.

For specific content of S701 and S702, refer to S601 and S602. Details are not described herein again.

In some possible manners, after receiving the revocation request #1, the CCF may determine service indication information (for example, an API service ID) of a service #a1 corresponding to the token #a1 and indication information of the first user (for example, an ID of the first user or an ID of a terminal corresponding to the first user). For a manner in which the CCF determines the service indication information of the service #a1 and the indication information of the first user, refer to S502. Details are not described herein again.

S703: The CCF sends a revocation request #3 to the AEF.

In some possible manners, the revocation request #3 is used to request to revoke the token #a1. For specific content of the revocation request #3, refer to the revocation request #1. No repeated description is provided.

In some other possible manners, the revocation request #3 is used to request to revoke a service authorized by the token #a1. The revocation request #3 may include the service indication information of the service #a1 and the indication information of the first user. For specific content of the service indication information of the service #a1 and the indication information of the first user, refer to the description in S502. Details are not described herein again.

In S703, the revocation request #3 may include indication information #4. The following uses an example to describe an implementation of the indication information #4.

In some examples, in the revocation request #3, the indication information #4 may be first information indicating the second level. For specific content of the first information, refer to the description of the first information in manner a3. Details are not described herein again. When the indication information #4 is the first information, the AEF may perform an operation in S704.

In some other examples, in the revocation request #3, the indication information #4 may include a null (null) value, which indicates to revoke, for the first user, authorization for the service #a1 corresponding to the token #a1 after the token #a1 is revoked. When the indication information #4 includes the null value, the AEF may release a resource of the service #a1 for the first user.

S704: The AEF determines, based on the first information, the second level of the service #a1 corresponding to the token #a1.

Optionally, before determining the second level, the AEF may determine that the type of the service #a1 is the second type. For specific content of determining, by the AEF, that the type of the service #a1 is the second type, refer to S403. Details are not described herein again.

S705: The AEF sends a policy update request #1 to the PCF, where the policy update request #1 may be used to request to execute the following policy: modifying the resource corresponding to the service #a1 to a resource corresponding to the second level.

S706: The PCF sends a policy update request #2 to the SMF, where the policy update request #2 may be used to request to execute the following policy: modifying the resource corresponding to the service #a1 to the resource corresponding to the second level.

S707: The SMF initiates a resource modification procedure, to modify the resource corresponding to the service #a1 to the resource corresponding to the second level.

S708: The SMF sends a policy update response #2 to the PCF.

S709: The PCF sends a policy update response #1 to the AEF.

S710: The AEF sends a revocation response #3 to the CCF.

S711: The CCF sends a revocation response #1 to the API invoker, where the revocation response #1 indicates that the token #a1 has been revoked.

S708 to S711 are optional steps.

For specific content of S705 to S711, refer to S505 to S511. Details are not described herein again. According to the method shown in FIG. 7, when the service #a1 is a service of a plurality of levels, after sending a request used to request to revoke, for the first user, authorization for the first level of the service #a1, the API invoker unit may further send, to the AEF, the first information indicating the second level. In this way, after the authorization for the first level of the service #a1 is revoked for the first user, a network side can still provide the service #a1 for the first user by using the resource corresponding to the second level, thereby avoiding interruption of the service #a1 for the first user and avoiding denial of service for the first user.

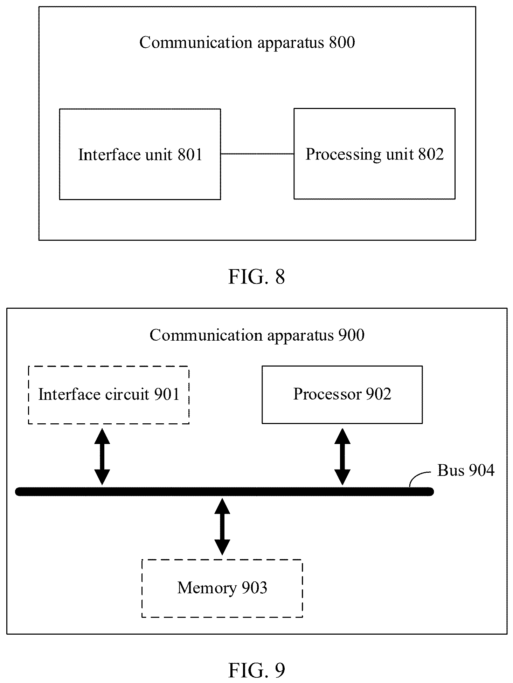

Based on a same technical concept as the foregoing method embodiments, an embodiment of this application provides a communication apparatus in FIG. 8, which may be configured to perform a function of a related step in the foregoing method embodiments. The function may be implemented by hardware, or may be implemented by software or by hardware executing corresponding software. The hardware or the software includes one or more modules corresponding to the foregoing function. A structure of the communication apparatus is shown in FIG. 8, and includes an interface unit 801 and a processing unit 802. The communication apparatus 800 may be an AzF, a CCF, an AEF, an API invoker, or an apparatus (for example, a terminal or an AF) including the API invoker, or may be a module, for example, a chip, a chip system, or a processor, used in the AzF, the CCF, the AEF, the API invoker, or the apparatus including the API invoker, or may be a logical node, a logical module, or software that can implement all or some functions of the AzF, the CCF, the AEF, the API invoker, or the apparatus including the API invoker. In addition, the communication apparatus 800 may implement the communication method provided in the foregoing embodiments and examples of this application. Functions of the units in the communication apparatus 800 are described below.

The interface unit 801 is configured to input and/or output information. When outputting information, the interface unit 801 may output the information to an apparatus other than the communication apparatus 800, or may output the information to another unit in the communication apparatus 800. In some manners, the interface unit 801 may be implemented by using at least one of a physical interface, a communication module, a communication interface, and an input/output interface. In some other manners, the interface unit 801 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 802 may be configured to support the communication apparatus 800 in performing processing actions in the foregoing method embodiments. The processing unit 802 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

In an implementation, the communication apparatus 800 is used in the first apparatus in the embodiment of this application shown in FIG. 3. The following describes a specific function of the processing unit 802 in this implementation.

The processing unit 802 is configured to: receive a first request through the interface unit 801, where the first request is used to request to revoke, for a first user, authorization for a first level of a first service, the first service includes a plurality of levels, and the plurality of levels include the first level; and determine at least one level of the first service based on the first request, where the at least one level includes a second level, and a resource corresponding to the second level of the first service is a first resource used to provide the first service for the first user.

In some possible manners, valid authorization of the first service for the first user includes authorization for at least two levels of the first service, and the at least two levels include the first level; and the processing unit 802 is configured to determine one or more levels other than the first level in the at least two levels as the at least one level.

Optionally, the processing unit 802 is further configured to send, through the interface unit 801, information indicating the at least one level.

In some examples, the at least one level includes N levels other than the first level in the at least two levels, N is an integer greater than or equal to 2, and the processing unit 802 is further configured to send first indication information through the interface unit 801, where the first indication information indicates a first rule for selecting the second level from the N levels.

In some other examples, the at least one level includes N levels other than the first level in the at least two levels, N is an integer greater than or equal to 2, and the processing unit 802 is further configured to select the second level from the N levels according to a first rule.

Optionally, the first rule includes at least one of the following: the second level is a highest-quality level in the N levels that is satisfiable by a network in which the first apparatus is located; or the second level is a latest authorized level in the N levels.

In some other possible manners, valid authorization of the first service for the first user includes authorization for one level of the first service, and the level is the first level; and the processing unit 802 is configured to determine the specified second level as the at least one level.

In another possible manner, the first request further includes first information, or the processing unit 802 is further configured to receive the first information through the interface unit 801, where the first information indicates the second level. The processing unit 802 is further configured to determine the second level as the at least one level.

Optionally, the processing unit 802 is further configured to send, through the interface unit 801, information indicating the second level.

In some implementations, the processing unit 802 is further configured to send, through the interface unit 801, at least one of the following: indication information of the first user or indication information of the first service.

In some possible manners, the processing unit 802 is configured to determine the at least one level of the first service for the first user based on the indication information of the first user and the indication information of the first service.

Optionally, the processing unit 802 is configured to: determine at least one piece of authorization information based on the indication information of the first user and the indication information of the first service, where each piece of authorization information in the at least one piece of authorization information includes the indication information of the first user and the indication information of the first service, and each piece of authorization information in the at least one piece of authorization information is authorization information of authorizing one or more levels of the first service to the first user; and determine the at least one level of the first service based on the at least one piece of authorization information.

In another implementation, the communication apparatus 800 is used in the second apparatus in the embodiment of this application shown in FIG. 3. The following describes a specific function of the processing unit 802 in this implementation.

The processing unit 802 is configured to send a first request through the interface unit 801, where the first request is used to request to revoke, for a first user, authorization for a first level of a first service, the first service includes a plurality of levels, and the plurality of levels include the first level. The first request further includes first information, or the processing unit 802 is further configured to send the first information through the interface unit 801, where the first information indicates a second level, and a resource corresponding to the second level of the first service is a first resource used to provide the first service for the first user.

For more detailed descriptions of the processing unit 802 and the interface unit 801, directly refer to related descriptions in the method embodiments shown in FIG. 3 and FIG. 5. Details are not described herein again.

It should be noted that division into the modules in the foregoing embodiments of this application is an example, and is merely logical function division. During actual implementation, there may be another division manner. In addition, function units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 9, which may be configured to perform related steps in the foregoing method embodiments. The communication apparatus may be an AzF, a CCF, an AEF, an API invoker, or an apparatus (for example, a terminal or an AF) including the API invoker, or may be a module, for example, a chip, a chip system, or a processor, used in the AzF, the CCF, the AEF, the API invoker, or the apparatus including the API invoker, or may be a logical node, a logical module, or software that can implement all or some functions of the AzF, the CCF, the AEF, the API invoker, or the apparatus including the API invoker. In addition, the communication apparatus may implement the communication method provided in the foregoing embodiments and examples of this application, and have a function of the communication apparatus shown in FIG. 8. As shown in FIG. 9, the communication apparatus 900 includes a processor 902. Optionally, the communication apparatus 900 further includes an interface circuit 901 and a memory 903. The interface circuit 901, the processor 902, and the memory 903 are coupled to each other.

Optionally, the interface circuit 901, the processor 902, and the memory 903 are coupled to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 9, but this does not mean that there is only one bus or only one type of bus. The interface circuit 901 is configured to input and/or output information. When outputting information, the interface circuit 901 may output the information to an apparatus other than the communication apparatus 900, or may output the information to another unit in the communication apparatus 900. For example, the interface circuit 901 may be implemented by using at least one of a physical interface, a communication module, a communication interface, an input/output interface, and a mobile communication module. The mobile communication module may include one or more of at least one antenna, at least one filter, a switch, a power amplifier, an LNA, and the like.

The processor 902 may be configured to support the communication apparatus 900 in performing processing actions in the foregoing method embodiments. When the communication apparatus 900 is configured to implement the foregoing method embodiments, the processor 902 may be further configured to implement functions of the foregoing processing unit 802. The processor 902 may be a CPU, or may be another general-purpose processor, a DSP, an ASIC, an FPGA or another programmable logic device, a transistor logic device, a hardware component, or any combination thereof. The general-purpose processor may be a microprocessor, or may be any conventional processor or the like.

In an implementation, the communication apparatus 900 is used in the first apparatus in the embodiment of this application shown in FIG. 3. The following describes a specific function of the processor 902 in this implementation.

The processor 902 is configured to: receive a first request through the interface circuit 901, where the first request is used to request to revoke, for a first user, authorization for a first level of a first service, the first service includes a plurality of levels, and the plurality of levels include the first level; and determine at least one level of the first service based on the first request, where the at least one level includes a second level, and a resource corresponding to the second level of the first service is a first resource used to provide the first service for the first user.

In another implementation, the communication apparatus 900 is used in the second apparatus in the embodiment of this application shown in FIG. 3. The following describes a specific function of the processor 902 in this implementation.

The processor 902 is configured to send a first request through the interface circuit 901, where the first request is used to request to revoke, for a first user, authorization for a first level of a first service, the first service includes a plurality of levels, and the plurality of levels include the first level. The first request further includes first information, or the processor 902 is further configured to send the first information through the interface circuit 901, where the first information indicates a second level, and a resource corresponding to the second level of the first service is a first resource used to provide the first service for the first user.

For a specific function of the processor 902, refer to the descriptions in the communication method provided in the foregoing embodiments and examples of this application, and the specific function descriptions of the communication apparatus 800 in the embodiment of this application shown in FIG. 8. Details are not described herein again.

The memory 903 is configured to store program instructions, data, and/or the like. Specifically, the program instructions may include program code, and the program code includes computer operation instructions. The memory 903 may include a RAM, and may further include a non-volatile memory (non-volatile memory), for example, at least one magnetic disk memory. The processor 902 executes the program instructions stored in the memory 903, and uses the data stored in the memory 903, to implement the foregoing function, so as to implement the communication method provided in the foregoing embodiments of this application. The memory 903 may be integrated with the processor 902, or may be a memory outside the communication apparatus.

It may be understood that the memory 903 in FIG. 9 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example and not limitation, many forms of RAMs are available, such as a static random access memory (Static RAM, SRAM), a dynamic random access memory (Dynamic RAM, DRAM), a synchronous dynamic random access memory (Synchronous DRAM, SDRAM), double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory for the system and the method described in this specification aims to include but is not limited to these memories and any memory of another appropriate type.

Based on the foregoing embodiments, an embodiment of this application further provides a computer program product including computer-executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by a computer. By way of example and not limitation, the computer-readable medium may include a RAM, a ROM, an EEPROM, a CD-ROM or another optical disk storage, a magnetic disk storage medium or another magnetic storage device, or any other medium that can be used to carry or store expected program code in a form of an instruction or a data structure and that can be accessed by a computer.

Based on the foregoing embodiments, an embodiment of this application further provides a chip.

The chip is configured to read a computer program stored in a memory, to implement the method provided in the foregoing embodiments.

Based on the foregoing embodiments, an embodiment of this application provides a chip system.

The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" usually indicates an "or" relationship between associated objects.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

It is clear that a person skilled in the art may make various modifications and variations to this application without departing from the scope of this application. Thus, this application is intended to cover these modifications and variations, provided that they fall within the scope of the claims of this application and their equivalent technologies.

## Claims

1. A communication method, applied to a first apparatus, and comprising:
receiving a first request, wherein the first request is used to request to revoke, for a first user, authorization for a first level of a first service, the first service comprises a plurality of levels, and the plurality of levels comprise the first level; and
determining at least one level of the first service based on the first request, wherein the at least one level comprises a second level, and a resource corresponding to the second level of the first service is a first resource used to provide the first service for the first user.

2. The method according to claim 1, wherein valid authorization of the first service for the first user comprises authorization for at least two levels of the first service, and the at least two levels comprise the first level; and
determining the at least one level of the first service based on the first request comprises:
determining one or more levels other than the first level in the at least two levels as the at least one level.

3. The method according to claim 2, further comprising:
sending information indicating the at least one level.

4. The method according to claim 3, wherein the at least one level comprises N levels other than the first level in the at least two levels, N is an integer greater than or equal to 2, and the method further comprises:
sending first indication information, wherein the first indication information indicates a first rule for selecting the second level from the N levels.

5. The method according to claim 3 or 4, wherein the information indicating the at least one level comprises at least one of the following:
indication information of the at least one level; or
information corresponding to the at least one level.

6. The method according to claim 2, wherein the at least one level comprises N levels other than the first level in the at least two levels, N is an integer greater than or equal to 2, and the method further comprises:
selecting the second level from the N levels according to a first rule.

7. The method according to claim 4 or 6, wherein the first rule comprises at least one of the following:
the second level is a highest-quality level in the N levels that is satisfiable by a network in which the first apparatus is located; or
the second level is a latest authorized level in the N levels.

8. The method according to claim 1, wherein valid authorization of the first service for the first user comprises authorization for one level of the first service, and the level is the first level; and
determining the at least one level based on the first request comprises:
determining the specified second level as the at least one level.

9. The method according to claim 1, wherein the first request further comprises first information, or the method further comprises: receiving the first information, wherein the first information indicates the second level; and
determining the at least one level based on the first request comprises:
determining the second level as the at least one level.

10. The method according to claim 9, wherein the first information is indication information of the second level, or the first information is information corresponding to the second level, and valid authorization of the first service for the first user comprises authorization for the second level of the first service.

11. The method according to any one of claims 6 and 8 to 10, further comprising:
sending information indicating the second level.

12. The method according to claim 11, wherein the information indicating the second level comprises at least one of the following:
the indication information of the second level; or
the information corresponding to the second level.

13. The method according to any one of claims 3 to 5, 11, and 12, further comprising:
sending at least one of the following: indication information of the first user or indication information of the first service.

14. The method according to any one of claims 1 to 13, wherein the first request comprises at least one of the following:
first authorization information or indication information of the first authorization information, wherein the first authorization information is authorization information of authorizing the first level of the first service to the first user.

15. The method according to any one of claims 1 to 14, wherein the first request comprises at least one of the following:
the indication information of the first user; or
the indication information of the first service.

16. The method according to claim 15, wherein the first request comprises the first authorization information, the first authorization information is the authorization information of authorizing the first level of the first service to the first user, and the first authorization information comprises at least one of the following: the indication information of the first user or the indication information of the first service.

17. The method according to claim 15 or 16, wherein determining the at least one level of the first service based on the first request comprises:
determining the at least one level of the first service for the first user based on the indication information of the first user and the indication information of the first service.

18. The method according to claim 17, wherein determining the at least one level of the first service for the first user based on the indication information of the first user and the indication information of the first service comprises:
determining at least one piece of authorization information based on the indication information of the first user and the indication information of the first service, wherein each piece of authorization information in the at least one piece of authorization information comprises the indication information of the first user and the indication information of the first service, and each piece of authorization information in the at least one piece of authorization information is authorization information of authorizing one or more levels of the first service to the first user; and
determining the at least one level of the first service based on the at least one piece of authorization information.

19. The method according to any one of claims 1 to 18, wherein the first service is a quality of service QoS service, a level of the first service is a quality of service level QoS level or a QoS level corresponding to a 5th generation 5G quality of service identifier value 5QI value, and the first resource is a protocol data unit PDU session.

20. A communication method, applied to a second apparatus, and comprising:
sending a first request, wherein the first request is used to request to revoke, for a first user, authorization for a first level of a first service, the first service comprises a plurality of levels, and the plurality of levels comprise the first level; and
the first request further comprises first information, or the method further comprises: sending the first information, wherein the first information indicates a second level, and a resource corresponding to the second level of the first service is a first resource used to provide the first service for the first user.

21. The method according to claim 20, wherein the first information is indication information of the second level, or the first information is information corresponding to the second level, and valid authorization of the first service for the first user comprises authorization for the second level of the first service.

22. The method according to claim 20 or 21, wherein the first request comprises at least one of the following:
first authorization information or indication information of the first authorization information, wherein the first authorization information is authorization information of authorizing the first level of the first service to the first user.

23. The method according to any one of claims 20 to 22, wherein the first request comprises at least one of the following:
indication information of the first user; or
indication information of the first service.

24. The method according to claim 23, wherein the first request comprises the first authorization information, the first authorization information is the authorization information of authorizing the first level of the first service to the first user, and the first authorization information comprises at least one of the following: the indication information of the first user or the indication information of the first service.

25. The method according to any one of claims 20 to 24, wherein the first service is a quality of service QoS service, a level of the first service is a quality of service level QoS level or a QoS level corresponding to a 5th generation 5G quality of service identifier value 5QI value, and the first resource is a protocol data unit PDU session.

26. A communication apparatus, comprising:
an interface unit, configured to receive and send information; and
a processing unit, configured to perform the method according to any one of claims 1 to 25 through the communication unit.

27. A communication apparatus, comprising a processor, wherein the processor is configured to perform the method according to any one of claims 1 to 25.

28. A communication system, comprising:
a first apparatus, configured to implement the method according to any one of claims 1 to 19; and
a second apparatus, configured to implement the method according to any one of claims 20 to 25.

29. A computer-readable storage medium, wherein the computer-readable storage medium stores a computer program or instructions, and when the computer program or the instructions are executed by a communication apparatus, the method according to any one of claims 1 to 25 is implemented.

30. A computer program product, wherein the computer program product comprises computer program code, and when the computer program code is run, the method according to any one of claims 1 to 25 is implemented.
